# EUROPÄISCHE PATENTSCHRIFT

(11) **EP 1 607 289 B1**
(45) Veröffentlichungstag und Bekanntmachung des Hinweises auf die Patenterteilung: **22.05.2013**
(21) Anmeldenummer: 05013106.9
(22) Anmeldetag: 17.06.2005
(51) Int. Cl.: B60R 25/02

(54) **Zündschloss für ein Kraftfahrzeug**
Ignition lock for a motor vehicle
Serrure de contact pour véhicule automobile

(30) Priorität: 19.06.2004 DE 102004029743
(43) Veröffentlichungstag der Anmeldung: 21.12.2005
(73) Patentinhaber: Marquardt GmbH, 78604 Rietheim-Weilheim (DE)
(72) Erfinder: Willmann, Hubert, 78199 Bräunlingen (DE); Geiger, August, 78607 Talheim (DE); Müller, Karl, 78628 Rottweil-Neufra (DE); Sachs, Ekkehard, 78549 Spaichingen (DE)
(74) Vertreter: Otten, Roth, Dobler & Partner

(56) Entgegenhaltungen:
- WO-A-2004/028871
- DE-A1- 4 434 587
- DE-A1- 10 029 008
- DE-A1- 10 150 708
- US-A1- 2004 129 041

## Beschreibung

Die Erfindung betrifft ein Zündschloß nach dem Oberbegriff des Patentanspruchs 1.

In Kraftfahrzeugen befindet sich zum Schutz gegen unbefugte Benutzung ein Zündschloß. Das Zündschloß und zugehörige Steuergeräte sind Bestandteile des Zündschloßsystems im Kraftfahrzeug.

Aus der DE 44 34 587 A1 ist ein solches Zündschloßsystem mit einem elektronischen Zündschloß und einem elektronischen Schlüssel bekannt. Das Zündschloß weist einen Rotor mit einer Aufnahme auf, in die der elektronische Schlüssel einführbar ist. Der Rotor ist mittels des Schlüssels zwischen einer Ausgangs- und mehreren Bewegungsstellungen manuell durch Drehung bewegbar. Nach positiver Auswertung eines zwischen dem Schlüssel und dem Zündschloß ausgetauschten elektronischen Codes ist wenigstens eine vom Zündschloß bewirkbare Funktion, wie das Einschalten von Verbrauchern im Kraftfahrzeug, beispielsweise von Radio, Beleuchtung usw., wie das Starten des Kraftfahrzeugs o. dgl., freigegeben. Zur Auslösung der Funktion wirkt der Rotor in der jeweiligen Bewegungsstellung dementsprechend auf ein Schaltelement ein.

Solche Zündschloßsysteme sind auch mit einer sogenannten "KeylessGo"-Funktionalität weiterentwickelt, bei der es genügt, daß der Benutzer den elektronischen Schlüssel, einen Identifilcations(ID)-Geber, eine Smartcard o. dgl. mit sich führt. Eine Authentikation des Schlüssels o. dgl. wird dann selbsttätig durchgeführt, wenn der Benutzer sich im Kraftfahrzeug befindet. Für den eigentlichen Startvorgang bewegt der Benutzer beispielsweise ein am Zündschloß angebrachtes Betätigungsorgan.

Ein derartiges Zündschloßsystem, bei dem zur Bedienung des Zündschlosses in die Aufnahme am Rotor wahlweise der Schlüssel für die bedienungsabhängige Fahrberechtigung in der Art einer NonKeylessGo-Funktionalität oder eine Handhabe für die bedienungsunabhängige Fahrberechtigung in der Art einer KeylessGo-Funktionalität einführbar ist, ist in der WO 2004/028871 A2 gezeigt. Bei diesem Zündschloß ist am Rotor und/oder im Rotor und/oder durch den Rotor wenigstens eine Zündschloßfunktion, wie die Sperrung und/oder Freigabe des Schlüssels im Zündschloß, die Betätigung eines Schalters mittels des Schlüssels im Zündschloß, die Sperrung und/oder Freigabe der Bewegung des Rotors o. dgl., bewirkbar.

Der Erfindung liegt die Aufgabe zugrunde, das Zündschloß weiter auszugestalten.

Diese Aufgabe wird bei einem gattungsgemäßen Zündschloß durch die kennzeichnenden Merkmale des Patentanspruchs 1 gelöst.

Beim erfindungsgemäßen Zündschloß wird die Erkennung, daß sich ein Schlüssel in der Aufnahme befindet, dadurch ermöglicht, daß bei Einführen des Schlüssels in die Aufnahme und/oder bei in der Aufnahme befindlichen Schlüssel ein elektrischer Schalter in der Art eines Sohlüssel-steckt-Schalters betätigbar und/oder betätigt ist. Hierzu befindet sich im Rotor ein Hebel, wobei der Hebel sich mit dem Rotor mitdreht. Eine Seite des Hebels reicht in den Steckweg'des Schlüssels hinein. Beim Stecken des Schlüssels wird der Hebel derart ausgelenkt, daß die andere Seite des Hebels den Schalter betätigt. Vorteilhafterweise wird dadurch in einfacher Art die Betriebssicherheit für das Zündschloß weiter gesteigert. Weitere Ausgestaltungen der Erfindung sind Gegenstand der Unteransprüche.

In einfacher Weise kann die Erkennung des Schlüssels dadurch weiter ausgestaltet sein, daß der Hebel mittels einer Druckfeder derart belastet ist, daß der Hebel in den Steckweg des Schlüssels hineinreicht. Der Schlüssel-steckt-Schalter kann auf einer Leiterplatte im Gehäuse des Zündschlosses befindlich sein. Die andere Seite des Hebels schwenkt beim Erreichen der Endstellung des Schlüssels in der Aufnahme in einen rohrähnlichen Zylinder am Rotor ein, derart daß der Schlüssel-steckt-Schalter mittels des rohrähnlichen Zylinders bei Bewegung des Rotors betätigt wird. Der Hebel ragt in ausgeschwenkter Stellung in eine Aussparung im Zylinderhinterteil, um bei nicht gestecktem Schlüssel eine Drehung des Rotors mit Sicherheit zu verhindern. Der rohrähnliche Zylinder kann noch weitere Schalter, wie einen Weckschalter oder einen ELV(Elektrische Lenkungsvertiegelung)-Schalter, betätigen. Mittels eines weiteren rohrähnlichen Zylinders am Rotor lassen sich noch Lichtschranken zur Detektierung verschiedener Drehzustände des Rotors steuern.

In einer Weiterbildung für ein Kraftfahrzeug mit einem automatischen Getriebe ist zur weiteren Erhöhung der Sicherheit für den Benutzer lediglich in Stellung ,P' des Wählhebels für das Getriebe der Schlüssel aus der Aufnahme entnehmbar. Hierzu ist der Wählhebel des Getriebes mit einer Seite eines Bowdenzugs verbunden. Die andere Seite des Bowdenzugs weist einen freistehenden Finger auf, der in das Zündschloß derart hineinragt, daß über die Stellung des Wählhebels die Freigabe des Schlüssels zur Entnahme aus der Aufnahme gesteuert ist. Ein mit dem Finger zusammenwirkender Hebel wird zur Steuerung der Freigabe des Schlüssels und/oder des Wählhebels von einer am Rotor befindlichen Kontur bewegt.

In weiterer Ausgestaltung wirkt eine Druckfeder auf den Hebel derart ein, daß der Hebel an einer Kontur am Rotor anliegt. Durch Drehung des Rotors ist der Hebel schwenkbar. Der Finger ist am Hebel abstützbar und/oder der Hebel ist durch den Finger blockierbar. Schließlich kann das Drehlager für den bewegbaren Rotor in der Art eines Zylinders ausgebildet sein, und zwar beispielsweise bestehend aus einem Zylindervorderteil und einem Zylinderhinterteil.

Bei dem Betätigungsorgan für die KeylessGo-Funktionalität handelt es sich um eine Handhabe, die wahlweise anstelle des elektronischen Schlüssels zur Einwirkung auf das Schaltelement in die Aufnahme einführbar ist. Dadurch kann bei Betätigung der Handhabe in der Ausgangsstellung des Rotors schaltend auf einen im Zündschloß befindlichen Schalter in der Art eines Schlüssel-Abzugs-Schalters eingewirkt werden. Dieser zusätzliche Schlüssel-Abzugs-Schalters ist bei in der Aufnahme befindlichen Schlüssel dauernd sowie bei in der Aufnahme befindlicher Handhabe lediglich bei deren Betätigung geschaltet, womit in einfacher Weise zwischen KeylessGo- sowie NonKeylessGo-Betrieb unterschieden werden kann.

In einer einfachen weiteren Ausgestaltung weist die Handhabe einen Betätiger mit einem Stößel auf, wobei die Handhabe mittels des Stößels bewegend auf eine Hülse im Rotor einwirkt. Der Schlüssel bewegt hingegen bei dessen Einstecken in die Aufnahme die Hülse direkt. Die Hülse betätigt schließlich über ein Betätigerteil, das mit einer Feder versehen ist, den Schlüssel-Abzugs-Schalter.

Damit die Drehung des Rotors durch einen nicht zulässigen Schlüssel mit Sicherheit verhindert ist, gibt eine mechanische Sperre die Drehung des Rotors lediglich nach positiver Auswertung des Codes frei. In einer bevorzugten Ausbildung besteht die mechanische Sperre aus einer Hebel-Drehsperre. Ein Hebel der Hebel-Drehsperre liegt am Rotor an, wobei der Rotor eine Kontur zum Auslenken des Hebels aufweist. Mit dem einen Ende des Hebels wirkt eine elektromagnetisch betätigbare Sperrklinke der Hebel-Drehsperre derart zusammen, daß der Hebel zum Auslenken freigebbar ist und/oder das Auslenken des Hebels gesperrt ist.

Ein einfacher Aufbau einer solchen Hebel-Drehsperre ist dadurch gegeben, daß der Hebel mittels einer Druckfeder am Rotor angelegt ist. Die Kontur des Rotors weist eine Sperrkante auf. Diese Sperrkante wirkt mit einer korrespondierenden Sperrkante am Hebel derart zusammen, daß die Bewegung des Rotors sperrbar ist.

Um weitergehend Fehlfunktionen des Zündschlosses auszuschließen, wenn in die Aufnahme wahlweise der Schlüssel oder eine Handhabe zur Bedienung des Zündschlosses einführbar ist, kann im Rotor ein beweglicher Sperrschieber angeordnet sein. Wenn weder der Schlüssel noch die Handhabe in die Aufnahme eingeführt ist, steht der Sperrschieber mit Aussparungen am Drehlager derart in Eingriff, daß eine Drehung des Rotors gesperrt ist. Wenn der Schlüssel in die Aufnahme eingeführt ist, kommt der Sperrschieber außer Eingriff mit den Aussparungen am Drehlager, derart daß eine Drehung des Rotors freigegeben ist. Wenn die Handhabe in die Aufnahme eingeführt ist, kommt der Sperrschieber ebenfalls in Eingriff mit den Aussparungen am Drehlager, derart daß eine Drehung des Rotors gesperrt ist.

In einer besonders vorteilhaften Ausgestaltung weist der Sperrschieber zwei vormontierte Druckfedern auf, derart daß der Sperrschieber bei dessen Montage in die Aussparung am Drehlager einrastet. Weiterhin weist der Sperrschieber einen Steg auf, der beim Einstecken des Schlüssels in die Aufnahme sich am Vorderteil des Schlüssels derart abstützt, daß der Sperrschieber zur Lösung der Sperrfunktion ausgelenkt wird. Die Handhabe weist eine Nut auf, in die der Steg beim Einstecken der Handhabe in die Aufnahme eingreift, derart daß der Sperrschieber in seiner die Sperrfunktion ausübenden Position bleibt. Schließlich kann das Drehlager für den Rotor in der Art eines Zylinders ausgebildet sein.

Neben den bereits genannten Vorteilen, bestehen die mit der Erfindung erzielten weiteren Vorteile insbesondere darin, daß ein kompaktes Zündschloß realisiert ist, das auch für enge Einbauräume im Kraftfahrzeug geeignet ist. Dennoch besitzt das Zündschloß eine hohe Funktionalität. Desweiteren ist das Zündschloß kostengünstig herstellbar.

Ausführungsbeispiele der Erfindung mit verschiedenen Weiterbildungen und Ausgestaltungen sind in den Zeichnungen dargestellt und werden im folgenden näher beschrieben. Es zeigen
- Fig. 1: ein Zündschloß in perspektivischer Ansicht von der Vorderseite,
- Fig. 2: das Zündschloß gemäß Fig. 1 von der Rückseite,
- Fig. 3: einen Schnitt durch das Vorderteil des Zündschlosses mit eingesteckter Handhabe,
- Fig. 4: einen Schnitt durch das Vorderteil des Zündschlosses mit eingestecktem Schlüssel,
- Fig. 5: die Rückseite des Zündschlosses, wobei der Abziehschutz in vorfixierter Stellung befindlich ist,
- Fig. 6: die Rückseite des Zündschlosses, wobei der Abziehschutz in verrasteter Endstellung befindlich ist,
- Fig. 7: das Innere des Zündschlosses mit gesperrtem Shiftlock,
- Fig. 8: das Innere des Zündschlosses mit freigegebenem Shiftlock,
- Fig. 9: einen Detailausschnitt aus Fig. 7,
- Fig. 10: einen Detailausschnitt aus Fig. 8,
- Fig. 11: die im Zündschloß befindliche Leiterplatte mitsamt der Elektronik sowie darauf befindlichen Schaltern,
- Fig. 12: einen Schnitt durch den Rotor, wobei kein Schlüssel in der Aufnahme befindlich ist,
- Fig. 13: einen Schnitt durch den Rotor, wobei der Schlüssel in der Aufnahme befindlich ist,
- Fig. 14: das Innere des Zündschlosses von der Rückseite, wobei kein Schlüssel in der Aufnahme befindlich ist,
- Fig. 15: das Innere des Zündschlosses von der Rückseite, wobei der Schlüssel in der Aufnahme befindlich ist,
- Fig. 16: das Innere des Zündschlosses wie in Fig. 14, wobei die Drehung des Rotors gesperrt ist,
- Fig. 17: das Innere des Zündschlosses wie in Fig. 15, wobei die Drehung des Rotors freigegeben ist,
- Fig. 18: einen Detailausschnitt aus dem Zündschloß mit eingesteckter Handhabe,
- Fig. 19: einen Detailausschnitt aus dem Zündschloß mit gedrückter Handhabe,
- Fig. 20: einen Detailausschnitt wie in Fig. 18, jedoch mit eingestecktem Schlüssel,
- Fig. 21: das Innere des Zündschlosses mit gesperrter Drehsperre,
- Fig. 22: das Innere des Zündschlosses mit freigegebener Drehsperre,
- Fig. 23: einen Detailausschnitt aus dem Zündschloß entsprechend der Fig. 21,
- Fig. 24: einen Detailausschnitt aus dem Zündschloß entsprechend der Fig. 22,
- Fig. 25: den Rotor mit Sperrschieber, wobei weder die Handhabe noch der Schlüssel in der Aufnahme befindlich sind,
- Fig. 26: den Rotor mit Sperrschieber, wobei der Schlüssel in der Aufnahme befindlich ist, und
- Fig. 27: den Rotor mit Sperrschieber, wobei die Handhabe in der Aufnahme befindlich ist.

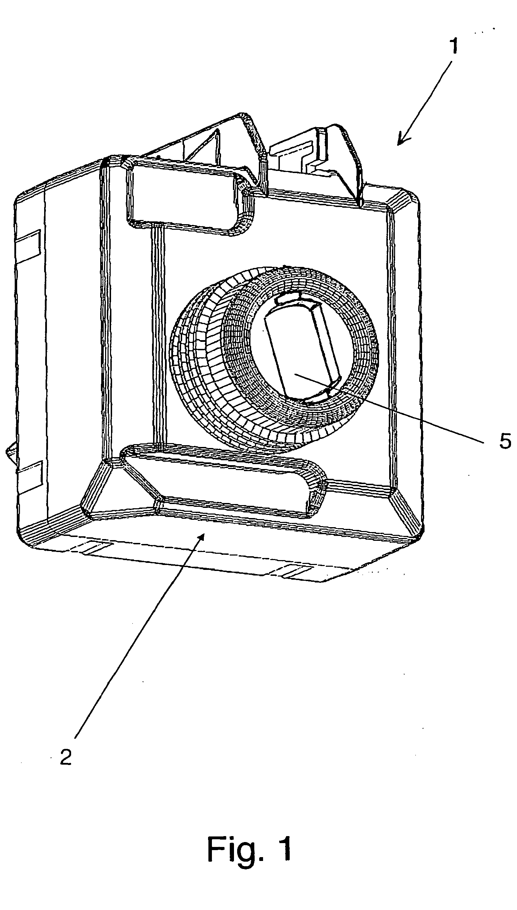

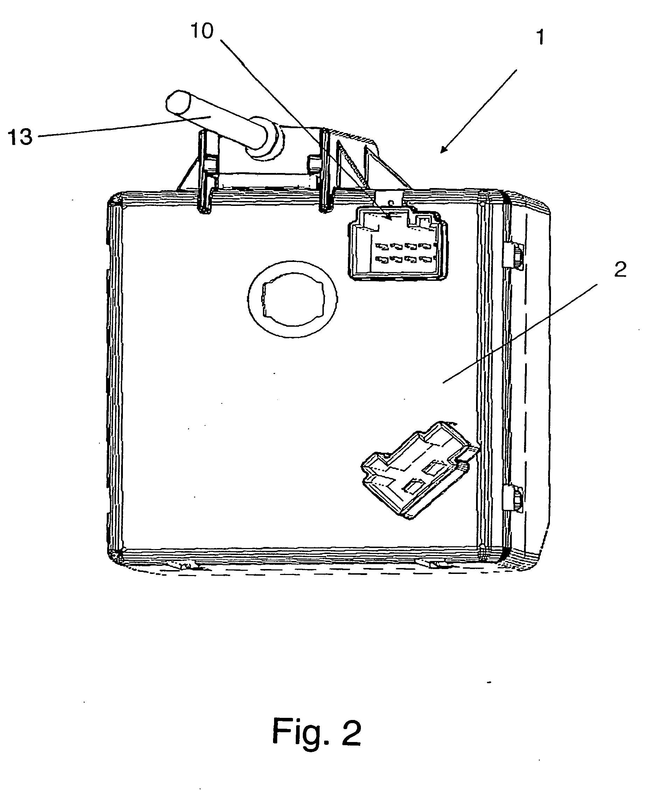

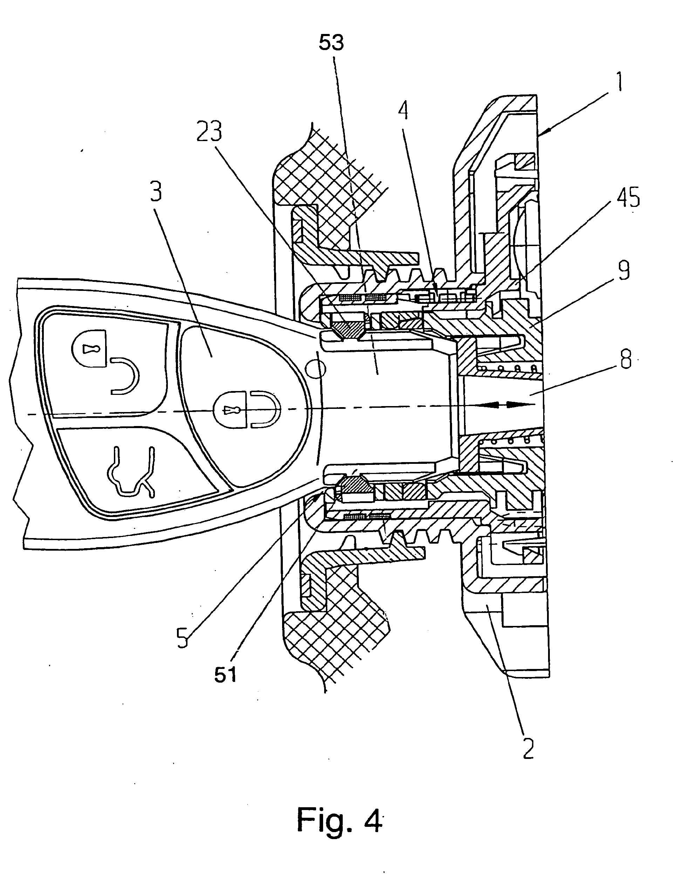

In Fig. 1 ist ein Zündschloß 1 als elektrisches Bauteil für ein Kraftfahrzeug von der Vorderseite und in Fig. 2 von der Rückseite zu sehen. Das Zündschloß 1 besitzt ein Gehäuse 2. Das Zündschloß 1 ist Bestandteil eines mit einem in Fig. 4 gezeigten elektronischen Schlüssel 3, einem Identifikations(ID)-Geber, einer Smartcard o. dgl. - nachfolgend nur noch mit Schlüssel 3 bezeichnet - zusammenwirkenden Zündschloßsystems für die bedienungsunabhängige Fahrberechtigung in der Art einer KeylessGo-Funktionalität und/oder für die bedienungsabhängige Fahrberechtigung in der Art einer NonKeylessGo-Funktionalität im Kraftfahrzeug. Der Schlüssel 3 befindet sich im Besitz des berechtigten Benutzers, womit dieser die Fahrberechtigung für das Kraftfahrzeug besitzt. Entsprechend der sogenannten KeylessGo-Funktionalität wird eine Authentikation zwischen dem Schlüssel 3, den der Benutzer beispielsweise in einer Hosentasche o. dgl. mit sich führt, und dem Zündschloßsystem durchgeführt, nach deren erfolgreichen Abschluß der Benutzer das Kraftfahrzeug in Betrieb nehmen kann.

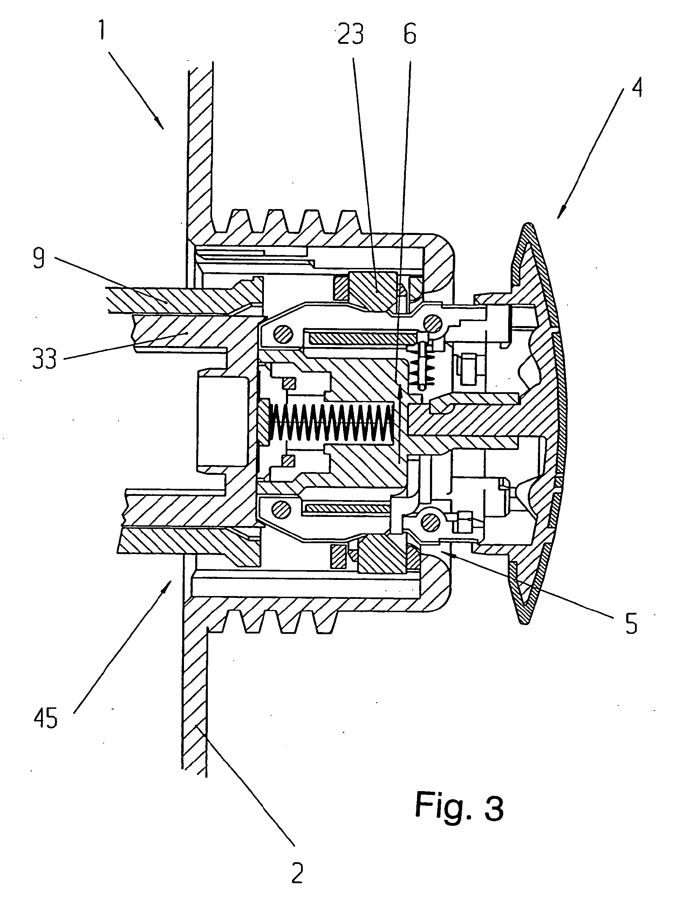

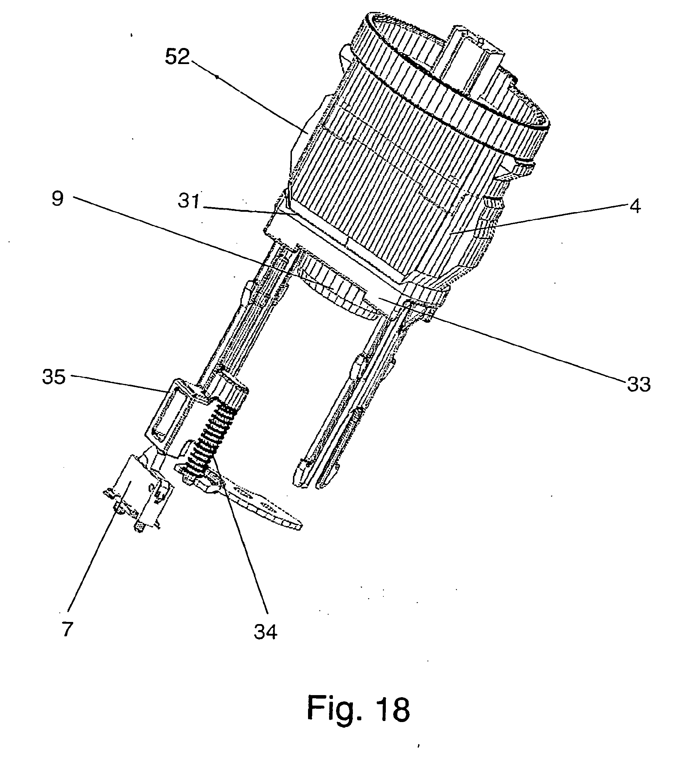

Für die Inbetriebnahme enthält das Zündschloß 1 wenigstens ein Schaltelement 7, das schematisch in Fig. 18 gezeigt ist, auf das mittels einer Handhabe 4 einwirkbar ist. Wie in Fig. 3 in näherer Ausgestaltung sichtbar ist, ist hierzu die Handhabe 4 in eine Aufnahme 5 im Zündschloß 1 einführbar und verbleibt dort, wenn nicht der weiter unten beschriebene Notbetrieb erfolgen soll. Eine manuelle Betätigung der in der Aufnahme 5 befindlichen, in der Art eines Druckknopfes ausgestalteten Handhabe 4 durch den Benutzer, indem die Handhabe 4 aus einer Nullstellung in wenigstens eine Betätigungsstellung durch Drücken manuell bewegt wird, führt dann zur schaltenden Einwirkung der Handhabe 4 mittels eines Betätigers 6 in der Betätigungsstellung auf das Schaltelement 7. Durch die schaltende Einwirkung auf das Schaltelement 7 wird die Authentikation ausgelöst, wobei zwischen dem Schlüssel 3 und dem Zündschloß 1 oder einem Steuergerät im Zündschloßsystem ein elektronischer Code ausgetauscht wird. Nach positiver Auswertung des Codes und damit nach erfolgreicher Authentikation wird dann das Starten des Kraftfahrzeugs in der KeylessGo-Funktionalität ausgelöst, so daß das Starten eine Funktion darstellt, die durch die Handhabe 4 ausübbar ist. Neben der Freigabe und/oder der Auslösung des Startens des Kraftfahrzeugs können vom Zündschloß 1 noch weitere Funktionen, wie das Einschalten von Verbrauchern im Kraftfahrzeug o. dgl., freigegeben und/oder bewirkt werden.

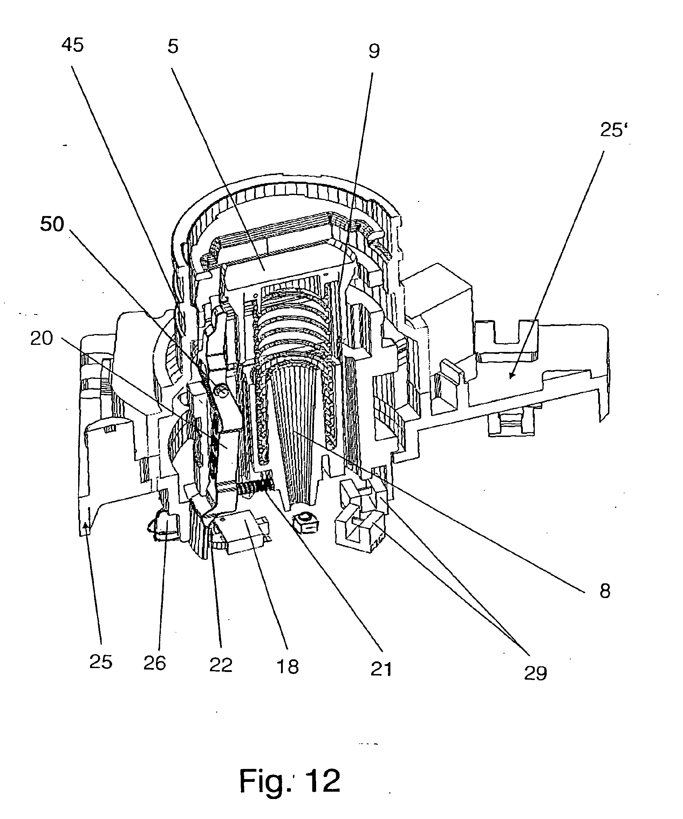

Das Zündschloß 1 ermöglicht auch einen Notbetrieb ohne KeylessGo-Funktionalität, also in der Art einer NonKeylessGo-Funktionalität, beispielsweise bei leerem Energiespeicher des Schlüssels 3 o. dgl., indem anstelle der Handhabe 4 wahlweise der elektronische Schlüssel 3 selbst in die Aufnahme 5 einsteckbar ist, was in Fig. 4 näher gezeigt ist. Hierzu kann die Handhabe 4 aus der Aufnahme 5 abgezogen werden. Ist der elektronische Schlüssel 3 in die Aufnahme 5 eingeführt, so wird in bekannter Weise Energie vom Zündschloß 1 auf den Schlüssel 3 zu dessen Betrieb übertragen. Dann kann zwischen dem Schlüssel 3 und dem Zündschloß 1 wiederum ein Code zur Authentikation ausgetauscht werden. Der Code läßt sich beispielsweise in Form von Infrarot-Signalen über im Zündschloß 1 angeordnete Lichtleiter 8 übertragen, wie in Fig. 4 zu sehen ist. Die Aufnahme 5 ist innerhalb eines bewegbaren Rotors 9 angeordnet, der bei Drehung mittels des Schlüssels 3 aus einer Ausgangsstellung in wenigstens eine Drehstellung auf nicht weiter gezeigte Schaltelemente schaltend einwirkt, derart daß nach erfolgreicher Authentikation wiederum eine Inbetriebnahme des Kraftfahrzeugs o. dgl. durchführbar ist. Das Drehlager 45 für den bewegbaren Rotor 9 ist in der Art eines Zylinders, bestehend aus einem Zylindervorderteil 25' und einem Zylinderhinterteil 25, wie in Fig. 12 zu sehen ist, ausgebildet.

Somit ist in die Aufnahme 5 wahlweise der elektronische Schlüssel 3 oder die Handhabe 4 zur Einwirkung auf wenigstens ein Schaltelement einführbar. Hervorzuheben ist, daß bei Betätigung mittels der Handhabe 4 in deren Betätigungsstellung, schaltend auf das Schaltelement 7 eingewirkt wird, wobei der Rotor 9 jedoch in Ausgangsstellung befindlich ist. Währenddessen wird bei Betätigung mittels des Schlüssels 3 in Drehstellung des Rotors 9 auf das hierfür zugehörige Schaltelement eingewirkt.

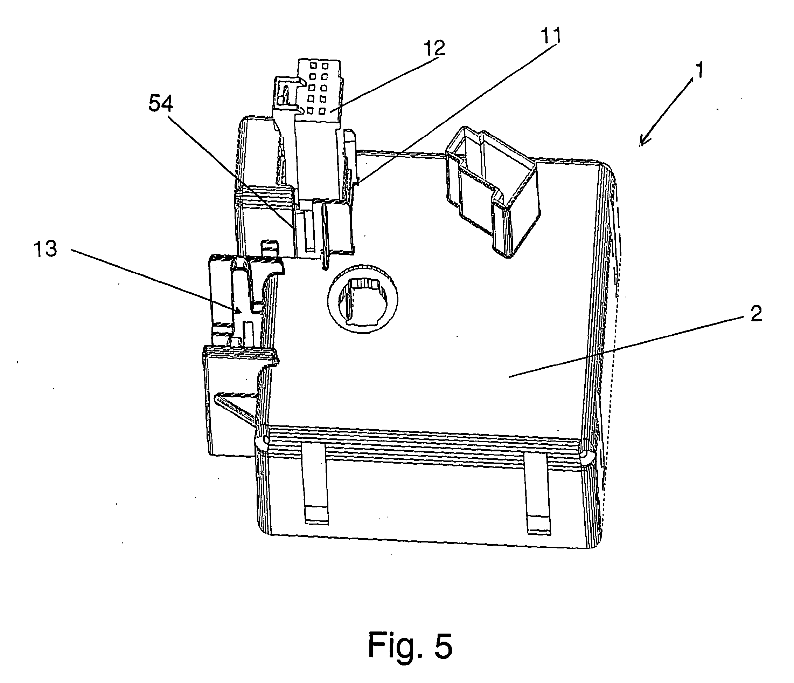

Das Zündschloß 1 wird mit elektrischer Energie versorgt und tauscht Daten mit weiteren Steuergeräten im Kraftfahrzeug aus. Hierzu ist das Gehäuse 2 mit einem elektrischen Steckanschluß 10 versehen, an den ein zugehöriger elektrischer Stecker 11 ansteckbar ist. Der Steckanschluß 10 ist in Fig. 2 und der Stecker 11 in Fig. 5 zu sehen. Der Stecker 11 ist im Gehäuse 2 mittels einer Verrastung dahingehend gesichert, daß diese nur schwer und unter großem Zeitaufwand gelöst werden kann, um den Stecker 11 abzuziehen.

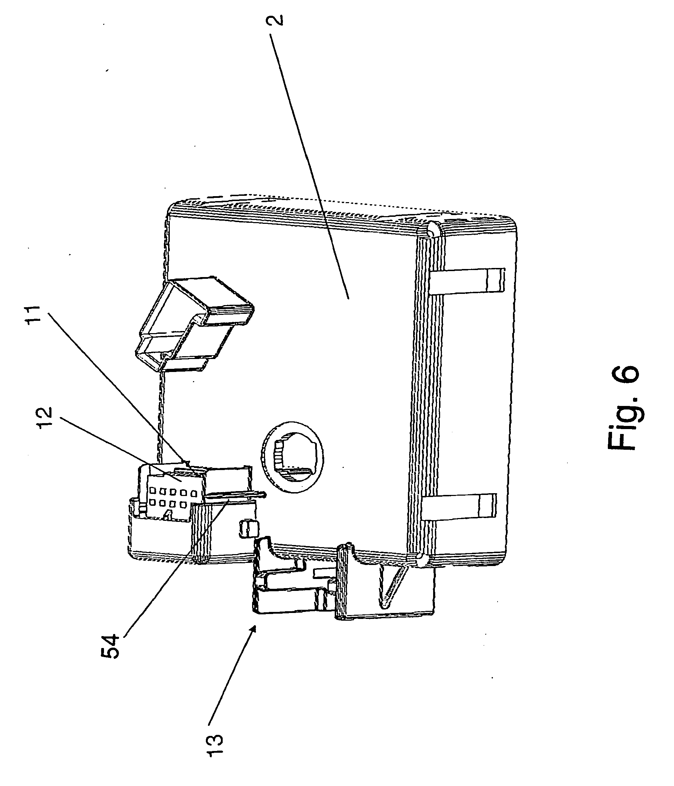

Zu diesem Zweck ist ein Abziehschutz 12 für den elektrischen Stecker 11 am Steckanschluß 10 angeordnet. Der Abziehschutz 12 ist zwischen einer vorfixierten Stellung, die in Fig. 5 zu sehen ist, sowie einer verrasteten Endstellung, die in Fig. 6 gezeigt ist, bewegbar. Dabei ist der Abziehschutz 12 mit geringer Kraft in die Endstellung verrastbar sowie lediglich mit großer Kraft aus der Endstellung entrastbar.

Der zusätzliche Abziehschutz 12 ist seitlich am Gehäuse 2 im Bereich des Steckerkragens 54 mittels einer Vorrastung vorfixiert. Diese Vorfixierung ist so ausgelegt, daß das gesamte Zündschloß 1 am zusätzlichen Abziehschutz 12 bewegt werden kann und dabei die Vorfixierung nicht gelöst wird. Nachdem der Stecker 11 in den Steckerkragen 54 gesteckt und verrastet ist, wird der Abziehschutz 12 aus der vorfixierten Stellung in die Endstellung geschoben. Der Übergang von der Vorrastung in die Endrastung ist so ausgelegt, daß die dafür benötigte Kraft gering ist, jedoch umgekehrt beim Zurückschieben bzw. Lösen der Endrastung in die Vorrastung wiederum größer ist.

In der Endstellung ist die vorhandene Verrastung des Steckers 11 nicht zugänglich. Die Endstellung kann auch nur sicher erreicht werden, wenn der Stecker 11 komplett gesteckt und am Gehäuse 2 fixiert ist. Diese Wirkungsweise kann folglich als zusätzliche Stecksicherung benutzt werden.

Vorteilhafterweise bewirkt der Abziehschutz 12 einen zusätzlichen Diebstahlschutz, da das Abziehen des Steckers 11 ohne größeren Zeitaufwand nicht mehr möglich ist.

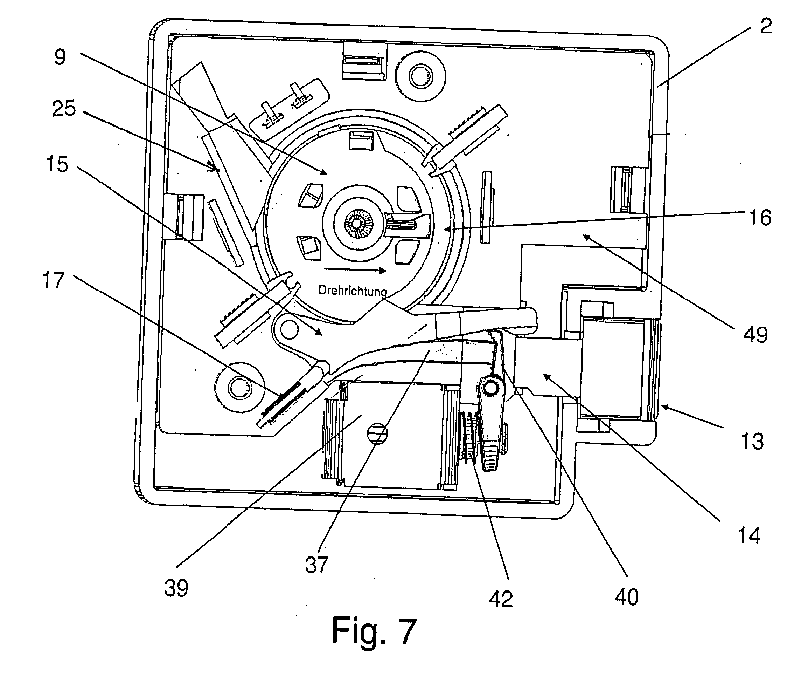

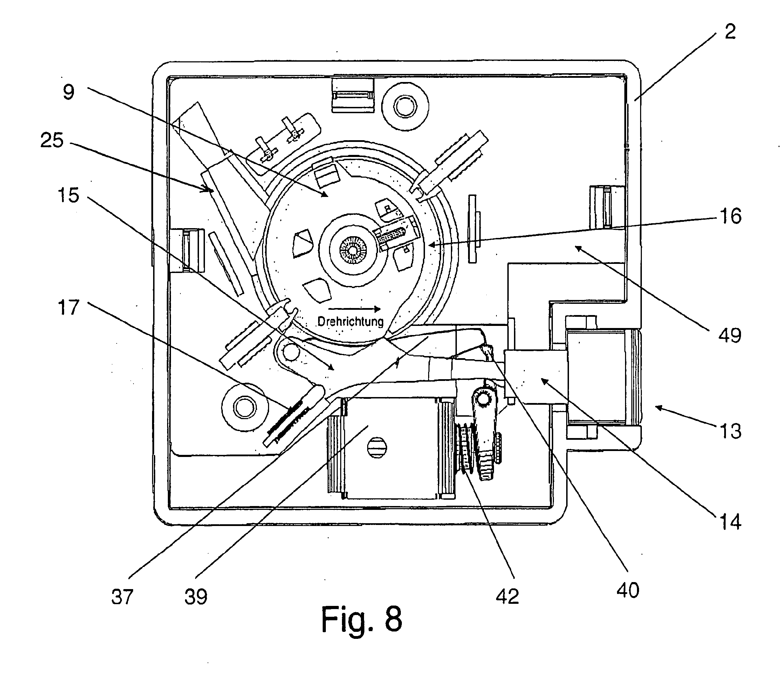

Besitzt das Kraftfahrzeug ein automatisches Getriebe, so darf es entsprechend dem sogenannten "Shift lock" lediglich in Stellung 'P' des Wählhebels für das Getriebe möglich sein, den Schlüssel 3 in die Ausgangsstellung '0' des Zündschlosses 1 zurück zu drehen und dann den Schlüssel 3 aus der Aufnahme 5 zu entnehmen. Desweiteren darf es aber auch nur möglich sein, bei gedrehtem Schlüssel 3 aus der Stellung 'P' in eine andere Stellung zu wechseln. Hierzu ist der nicht weiter gezeigte Wählhebel des Getriebes mit einer Seite eines in Fig. 2 sichtbaren Bowdenzugs 13 verbunden. Die andere Seite des Bowdenzugs 13, der gemäß Fig. 2 am Gehäuse 2 befestigt ist, weist einen in Fig. 7 sowie Fig. 8 gezeigten freistehenden Finger 14 auf, der in das Gehäuse 2 des Zündschlosses 1 derart hineinragt, daß über die Stellung des Wählhebels die Freigabe des Schlüssels 3 zur Entnahme aus der Aufnahme 5 gesteuert ist. Ein mit dem Finger 14 zusammenwirkender Hebel 15 wird zur Steuerung der Freigabe des Schlüssels 3 und/oder des Wählhebels von einer am Rotor 9 befindlichen Kontur 16 bewegt.

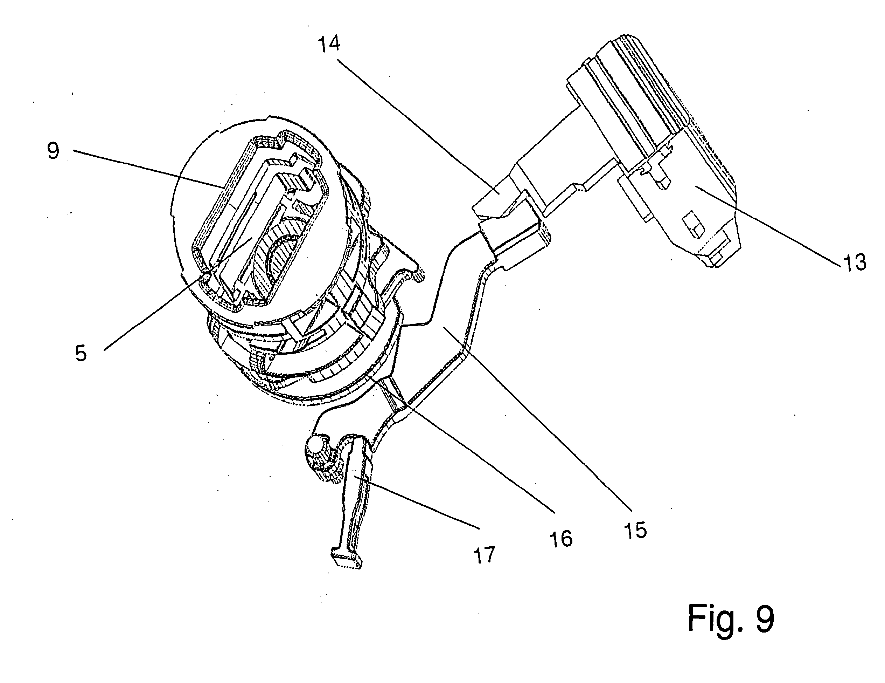

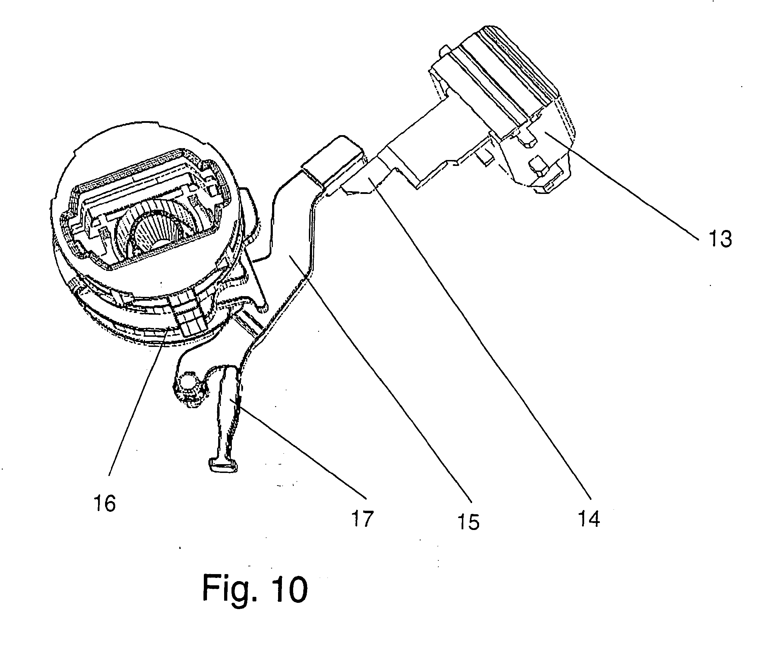

Auf den Hebel 15 wirkt eine Druckfeder 17 ein, welche bewirkt, daß der Hebel 15 immer am Rotor 9 anliegt. Im Bereich der Berührung des Hebels 15 ist am Rotor 9 die mitdrehende Kontur 16 angebracht. Diese Kontur 16 ist so ausgebildet, daß der druckfederbelastete Hebel 15 beim Drehen des Rotors 9 eine Schwenkbewegung machen kann, wie man durch Vergleich der Fig. 9 und 10 erkennt. In der Ausgangsstellung '0' des Zündschlosses 1 ragt nun gemäß Fig. 9 der Finger 14 des Bowdenzuges 13 über den Hebel 15. Versucht man nun, den Wählhebel für das Getriebe aus der Stellung, 'P' zu bewegen, so stützt sich der Finger 14 auf dem Hebel 15 ab. Um ein Verbiegen des Hebels 15 bei großen Kräften auf den Wählhebel zu verhindern, stützt sich dieser wiederum im Gehäuse 2 des Zündschlosses 1 ab. Wird nun der Schlüssel 3 samt Rotor 9 im Zündschloß 1 gedreht, so schwenkt der Hebel 15 unter dem Finger 14 weg. Dadurch kann nun gemäß Fig. 10 der Finger 14 des Bowdenzuges 13 nach unten bewegt werden. Somit ist es nun möglich den Wählhebel aus der Stellung 'P' zu bewegen.

Steht nun beim Zurückdrehen des Schlüssels 3 der Wählhebel nicht in Stellung 'P', so blockiert der nach unten gezogene Finger 14 des Bowdenzuges 13 die Rückschwenkbewegung des Hebels 15. Über die Kontur 16 am Rotor 9 und mittels des Hebels 15 wird nun die Drehung des Rotors 9 in Ausgangsstellung '0' ebenfalls verhindert und der Schlüssel 3 kann somit nicht abgezogen werden.

Vorteilhafterweise kann mit dieser Ausgestaltung der Abzug des Schlüssels 3 sowie die bewußte Bewegung des Wählhebels aus der Stellung 'P' beeinflußt werden. Der Bediener muß folglich bewußt das Abziehen des Schlüssels 3 und/oder das Bewegen des Wählhebels vollziehen. Es ist kein Abziehen des Schlüssel 3 möglich, wenn der Wählhebel nicht in Stellung 'P' ist. Desweiteren ist kein Bewegen des Wählhebels möglich, wenn der Schlüssel 3 nicht gedreht ist.

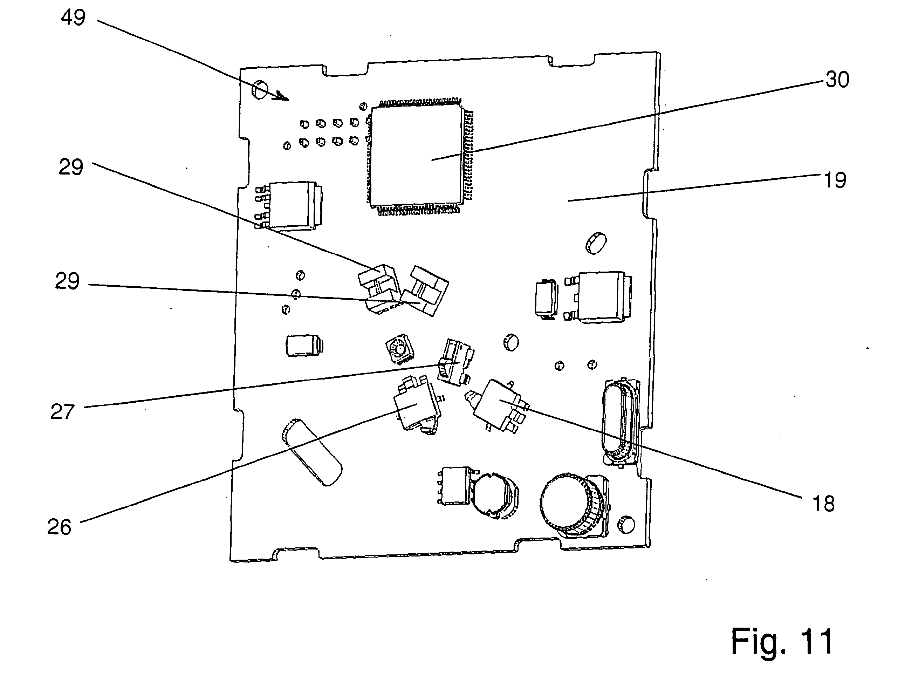

Wird der Schlüssel 3 in das Zündschloß 1 gesteckt, soll dies durch das Betätigen eines Schalters 18 erkannt werden. Beim elektrischen Schalter 18 handelt es sich um den sogenannten "Schlüssel-Steckt-Schalter" (SSS), der auf einer im Gehäuse 2 befindlichen, in Fig. 11 gezeigten Leiterplatte 19 angeordnet ist. Die Leiterplatte 19 nimmt auch die elektrischen und/oder elektronischen Bauelemente 30 des Elektronikmoduls 49 für die Steuerung des Zündschlosses 1 auf. Dieser SSS-Schalter 18 wird bei Einführen des Schlüssels 3 in die Aufnahme 5 und/oder ist bei in der Aufnahme 5 befindlichem Schlüssel 3 betätigt. Der Betätigungsweg des SSS-Schalters 18 beträgt ca. 2 mm, während der Weg des Schlüssels 3 jedoch ca. 4+2mm beträgt. Damit wird der Schlüssel 3 nach dem Erreichen der Endstellung des SSS-Schalters 18 noch ca. 3,5 mm in das Zündschloß 1 eingeführt. Der SSS-Schalter 18 muß dabei sofort betätigt und auf dem gesamten Steckweg des Schlüssels 3 gehalten werden. Diese Forderung verhindert ein stirnseitiges Anlenken des Rotors 9 an den Schalter 18, da ein Überhub eines Schalters in dieser Baugröße keine 3 bis 3,5 mm beträgt. Anschließend wird der Rotor 9 mittels des Schlüssels 3 gedreht. Hierbei muß der SSS-Schalter 18 immer noch erkennen daß der Schlüssel 3 steckt, was wiederum bedeutet, daß der SSS-Schalter 18 betätigt bleiben muß.

Zur Lösung dieser Problematik befindet sich im Rotor 9 ein weiterer Hebel 20, wie man anhand der Fig. 12 erkennt. Der Hebel 20 dreht sich mit dem Rotor 9 mit. Eine Seite des Hebels 20 reicht in den Steckweg des Schlüssels 3 in der Aufnahme 5 hinein. Beim Stecken des Schlüssels 3 wird der Hebel 20 derart ausgelenkt, daß die andere Seite des Hebels 20 den SSS-Schalter 18 betätigt.

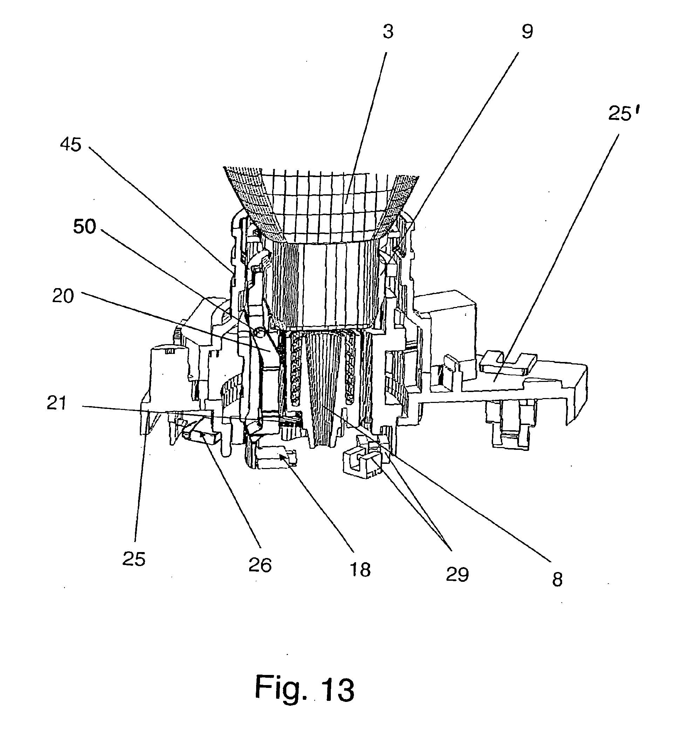

Wie in Fig. 12 zu sehen ist, wobei dort kein Schlüssel 3 in der Aufnahme 5 befindlich ist, ist der Hebel 20 derart im Rotor 9 eingebaut, daß der Hebel 20 sich mit dem Rotor 9 mitdreht. Eine Druckfeder 21 bewirkt, daß die eine Seite des Hebels 20 in den Steckweg des Schlüssels 3 hineinreicht. Beim Stecken eines Schlüssels 3 wird der Hebel 20 nach außen ausgelenkt, wie anhand von Fig. 13 zu erkennen ist. Die andere Seite des Hebels 20 betätigt beim Schwenken um die Lagerstelle 50 den SSS-Schalter 18 auf der Leiterplatte 19. Durch die günstige Wahl der Lagerstelle 50 im Rotor 9 führt ein geringes Auslenken des Hebels 20 im Bereich des Schlüssels 3 zu einem größeren Betätigungsweg am SSS-Schalter 18. Durch dieses Prinzip wird erreicht, daß der SSS-Schalter 18 mittels des Hebels 20 sofort betätigt und über den gesamten Steckweg des Schlüssels 3 betätigt bleibt. Die Länge des Steckweges ist somit nicht wichtig, mit Ausnahme des Mindestwegs für die Betätigung des SSS-Schalters 18.

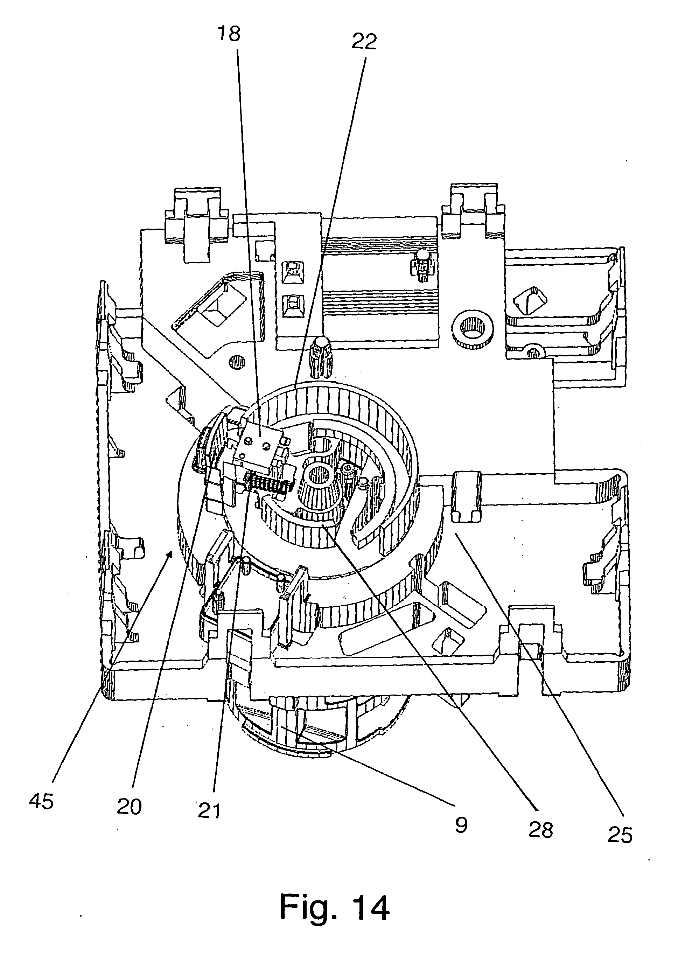

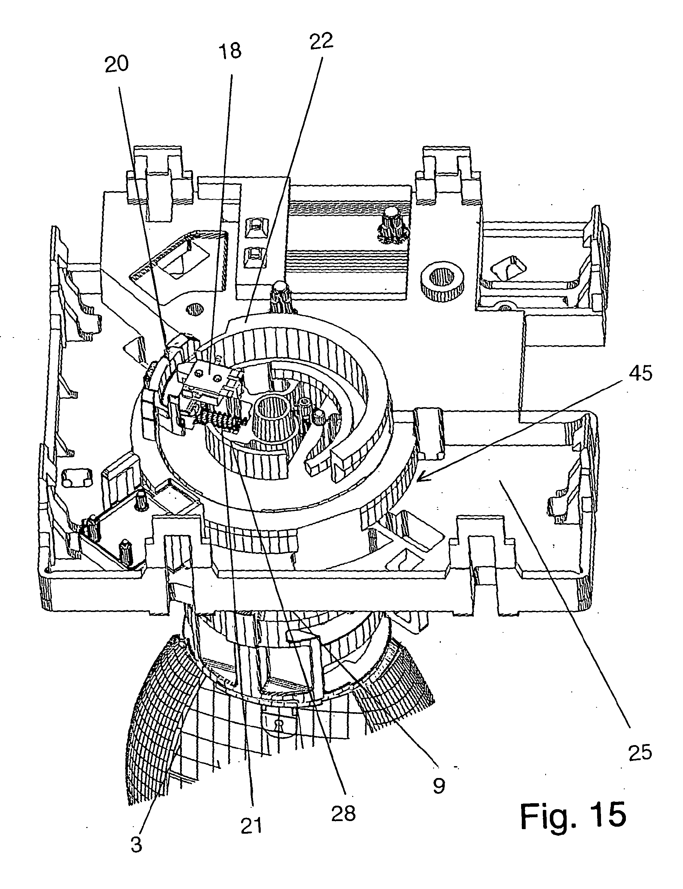

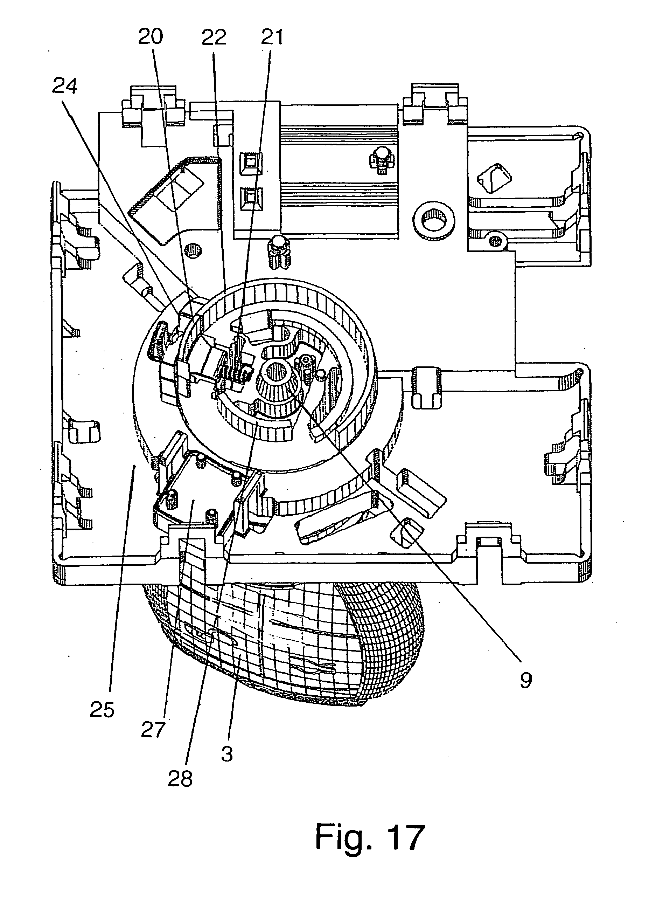

Der Einsteckvorgang des Schlüssels 3 ist von der Unterseite des Rotors 9 in Fig. 14 bis 17 zu sehen. In Fig. 14 ist die Stellung des Hebels 20 gezeigt, wenn kein Schlüssel 3 in der Aufnahme 5 befindlich ist. Wird der Schlüssel 3 in die Aufnahme 5 eingesteckt, wobei der Schlüssel 3 die eine Seite des Hebels 20 bewegt, so schwenkt beim Erreichen der Endstellung die andere Seite des Hebels 20 in einen rohrähnlichen Zylinder 22, wie in Fig. 15 zu sehen ist. Die Innenseite des Hebels 20 ist dann auf der gleichen Position wie die Innenseite des rohrähnlichen Zylinders 22. Wird der Schlüssel 3 samt Rotor 9 und Hebel 20 gedreht, so dreht sich die Betätigung des SSS-Schalters 18 von der Innenseite des Hebels 20 auf die Innenwand des rohrähnlichen Zylinders 22 weiter, wie anhand von Fig. 15 bzw. Fig. 17 zu erkennen ist. Somit bleibt der SSS-Schalter 18 auch bei Drehung des Rotors 9 weiterhin betätigt entsprechend seiner Funktion zur Abgabe des Signals "Schlüssel-Steckt". Erfolgt nun ein Zurückdrehen des Rotors 9, so wandert die Betätigung des Schalters 18 von der Innenwand des rohrähnlichen Zylinders 22 auf die Innenseite des Hebels 20 wieder zurück.

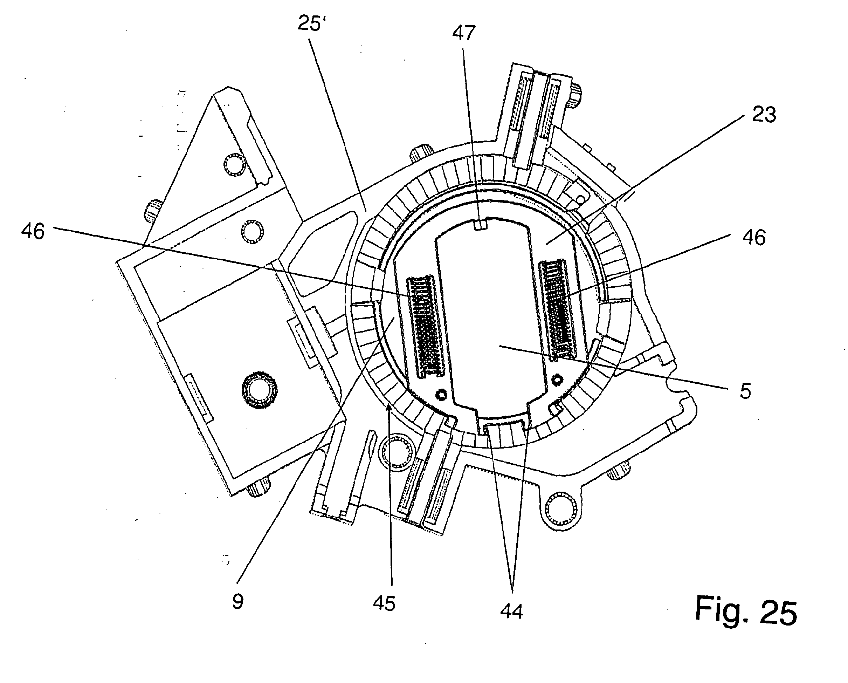

Damit die Meldung "Schlüssel-Steckt" des SSS-Schalters 18 in allen Fällen stimmt, muß sichergestellt sein, daß der Schlüssel 3 aus der Aufnahme 5 nur abgezogen werden kann, wenn der Hebel 20 den SSS-Schalter 18 betätigt und beim Abziehen des Schlüssels 3 gleichzeitig wieder vom SSS-Schalter 18 wegschwenken kann. In keiner anderen Lage des Rotors 9 darf der Schlüssel 3 abgezogen werden können. Dies wird durch ein in Fig. 25 gezeigtes Rastschieberpaar 23 erreicht, welches gemäß Fig. 4 den Schlüssel 3 am vorderen Kragen 51 hält und nur in einer Stellung ein Abziehen des Schlüssels 3 erlaubt.

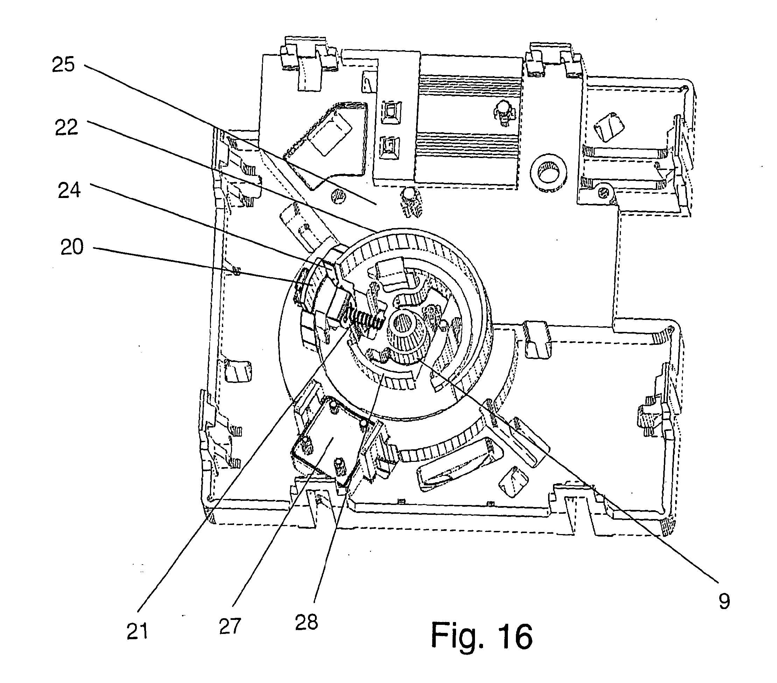

Eine weitere Funktion des Hebels 20 besteht darin, bei nichtgestecktem Schlüssel 3 sowie auch bei fehlender Handhabe 4, bei der es sich um den sogenannten "Taster-Start-Stopp" TSS handelt, eine Drehbarkeit des Rotors 9 zu verhindern, um Manipulationen am Zündschloß 1 auszuschließen. Dies wird dadurch erreicht, daß der Hebel 20 in ausgeschwenkter Stellung in eine Aussparung 24 im Zylinderhinterteil 25 ragt, wie man anhand von Fig. 16 sieht. Der rohrähnliche Zylinder 22 wird auch noch zur Anlenkung des Weckschalters 26 (sogenannter "H0-Schalter") und zur Betätigung eines ELV-Schalters 27 benutzt, die in Fig. 11 zu sehen sind. Der Weckschalter 26 dient zur Umschaltung der Elektronik im Zündschloß 1 von einem energiesparenden Schlafzustand in den Betriebszustand aufgrund des Beginns der Drehbewegung des Rotors 9. Der ELV-Schalter 27 steuert die elektrische Lenkungsverriegelung im Kraftfahrzeug an. Ein im wesentlichen konzentrisch zum rohrähnlichen Zylinder 22 angeordneter, weiterer rohrähnlicher Zylinder 28, jedoch mit kleinerem Durchmesser, wird gemäß Fig. 14 zur Steuerung und/oder Trennung von Lichtschranken 29, die in Fig. 13 zu sehen sind, benutzt, deren Schaltsignale verschiedene Drehzustände des Rotors 9 zur entsprechenden Auslösung von sonstigen Funktionen im Kraftfahrzeug detektieren.

Durch den Hebel 20 besteht vorteilhafterweise die Möglichkeit, einen gesteckten Schlüssel 3 auf der Leiterplatte 19 elektronisch zu erkennen. Auch über den gesamten Steckweg des Schlüssels 3 bleibt der SSS-Schalter 18 betätigt. Desweiteren kann der Rotor 9 mit Hilfe des Schlüssels 3 gedreht werden wobei der SSS-Schalter 18 weiterhin betätigt bleibt.

Wie bereits ausgeführt, soll beim KeylessGo-Betrieb das Kraftfahrzeug mittels der Handhabe 4, also dem Taster-Start-Stopp TSS, welche sich im elektronischen Zündschloß 1 befindet, gestartet und gestoppt werden. Zu diesem Zweck ist im Zündschloß 1 der in Fig. 18 sichtbare, zusätzliche Schalter 7, der sogenannte "Schlüssel-Abzugs-Schalter" SAS, befindlich, der der Unterscheidung des Betriebs mittels des Schlüssels 3 oder der Handhabe 4 dient. Der SAS-Schalter 7 ist bei in der Aufnahme 5 befindlichem Schlüssel 3 dauernd geschaltet. Bei in der Aufnahme 5 befindlicher Handhabe 4 ist der SAS-Schalter 7 hingegen lediglich bei deren Betätigung durch den Benutzer in die Betätigungsstellung geschaltet.

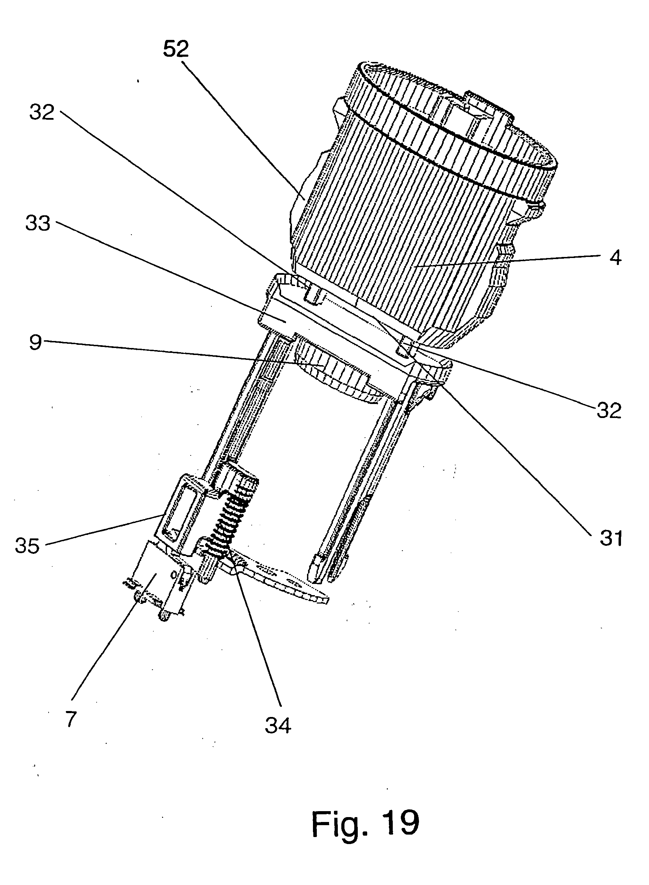

Wie in Fig. 19 zu sehen ist, wird beim Drücken der Handhabe 4 durch den Benutzer ein Hub erzeugt, wodurch auf der Unterseite 31 der Handhabe 4 Stößel 32, die sich an dem in Fig. 3 sichtbaren Betätiger 6 befinden, aus der Handhabe 4 herausgedrückt werden. Dieser Hub betätigt über eine Hülse 33 im Rotor 9 den SAS-Schalter 7 und ein Startsignal für das Kraftfahrzeug wird ausgelöst, falls die Authentikation des Schlüssels 3 erfolgreich ist. Bei einem erneuten Druck auf die Handhabe 4 wird wieder ein Hub erzeugt, der den SAS-Schalter 7 erneut betätigt, und das Kraftfahrzeug wird dann gestoppt.

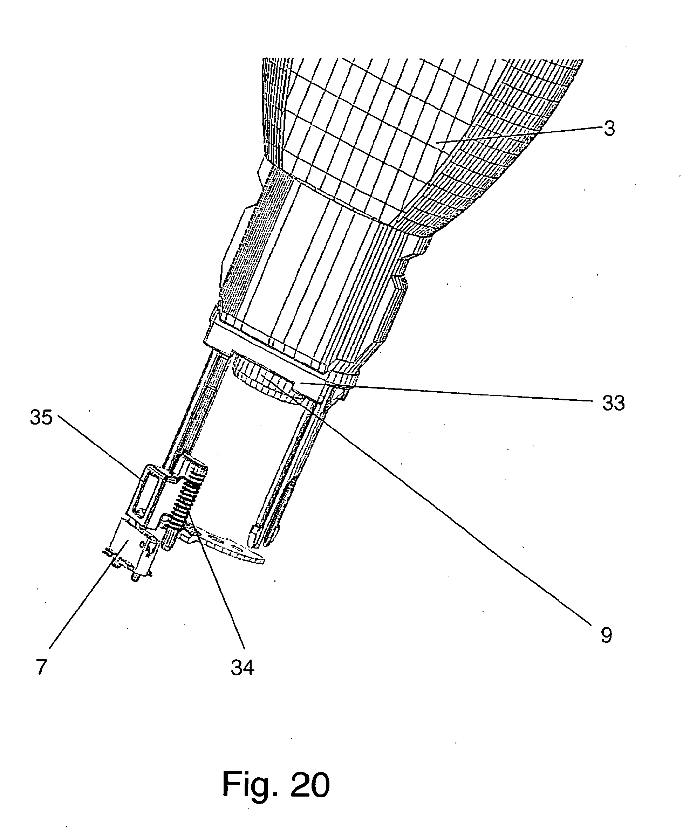

Wird nun bewußt auf den Betrieb mittels des Schlüssels 3 entsprechend der NonKeylessGo-Funktionalität umgestellt, muß diese zusätzliche Mechanik auch bei einem sich drehenden Rotor 9 funktionieren. Der SAS-Schalter 7 ist ebenfalls auf der Leiterplatte 19 positioniert. Die Handhabe 4 ist, bezogen auf den Haltekragen 52 der Handhabe 4 und den Kragen 51 des Schlüssels 3, um ca. 2,25 mm kürzer als der Schlüssel 3. Durch Druck auf die Handhabe 4 werden die beiden Stößel 32 aus der Handhabe 4 gedrückt und gleichen so den Längenunterschied bis zur Hülse 33 aus. Damit wird erreicht, daß die Hülse 33 im Rotor 9 sowohl im NonKeylessGo-Betrieb mittels des Schlüssels 3 gemäß Fig. 20 als auch nach erfolgten Hub der Handhabe 4 im KeylessGo-Betrieb gemäß Fig. 18 und 19 immer gleich weit ins Zündschloß 1 hineingedrückt wird. Durch die Hülse 33 wird nun ein mit einer Feder 34 versehenes Betätigerteil 35 auf den SAS-Schalter 7 gedrückt. Somit gibt dieser ein Signal ab, und zwar beim NonKeylessGo-Betrieb dauernd und bei KeylessGo-Betrieb nur solange die Handhabe 4 gedrückt wird. Anhand der Art dieses Signals sowie gegebenfalls weiterer Kriterien, wie betätigter SSS-Schalter 18, Vorhandensein der Infrarot-Strecke zwischen Schlüssel 3 und Zündschloß 1 o. dgl., kann somit zwischen NonKeylessGo- und KeylessGo-Betrieb unterschieden werden.

Beim NonKeylessGo-Betrieb dreht sich die Hülse 33 sowie das gefederte Betätigerteil 35 mit. Damit der SAS-Schalter 7 weiterhin betätigt bleibt, ist in Drehrichtung des Rotors 9 auf Höhe der Endstellung des Betätigerteils 35 ein nicht weiter gezeigtes Zylinderrohr, das vergleichbar mit dem rohrähnlichen Zylinder 22 gemäß Fig. 14 ausgestaltet ist, angebracht. Dreht sich nun der Rotor 9 wird die Betätigung des SAS-Schalters 7 vom Betätigerteil 35 auf dieses Zylinderrohr übertragen. Dadurch ist sichergestellt, daß der SAS-Schalter 7 im NonKeylessGo-Betrieb immer betätigt ist. Beim Zurückdrehen des Rotors 9 mittels des Schlüssels 3 wird die Betätigung des SAS-Schalters 7 vom Zylinderrohr wieder auf das Betätigerteil 35 übergeben. Durch das Abziehen des Schlüssels 3 wird der SAS-Schalter 7 dann ausgeschaltet.

Mit dieser Ausgestaltung kann der weitere SAS-Schalter 7 neben dem SSS-Schalter 18, der durch den Hebel 20 ausgelöst wird, angelenkt werden. Damit kann vorteilhafterweise im Zündschloß 1 zwischen NonKeylessGo-Betrieb mittels des Schlüssels 3 und KeylessGo-Betrieb mittels der Handhabe 4 unterschieden werden.

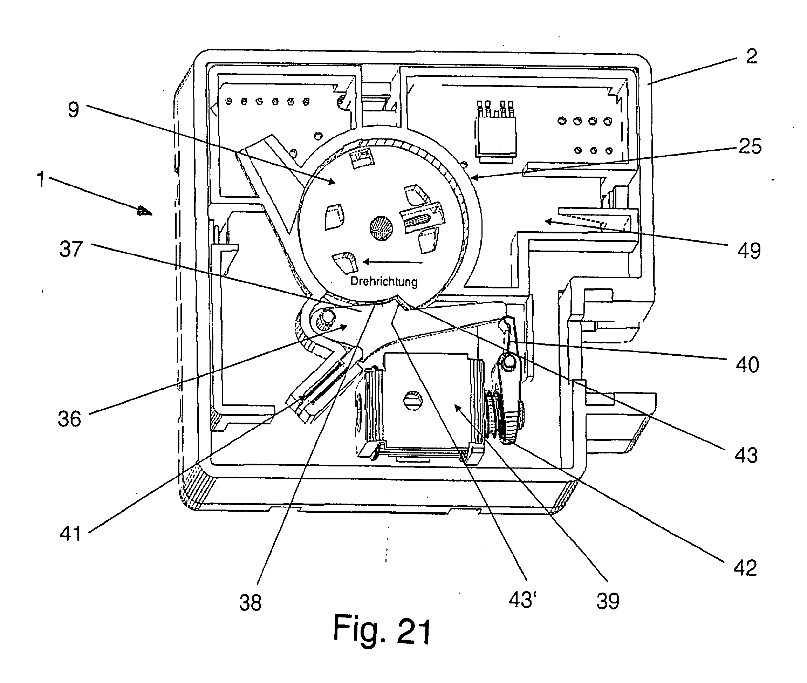

Das elektronische Zündschloß 1 darf nur mittels des Schlüssels 3 gedreht werden, wenn dieser elektronisch als richtig erkannt wird, wozu eine mechanische Sperre die Drehung des Rotors 9 lediglich nach positiver Auswertung des Codes freigibt. Bei allen anderen, nicht zulässigen Schlüsseln darf die Drehung nur bis zu der mechanischen Sperre möglich sein. Wie anhand von Fig. 21 zu erkennen ist, besteht die mechanische Sperre aus einer Hebel-Drehsperre 36. Die Hebel-Drehsperre 36 umfaßt einen Hebel 37, der ebenfalls am Rotor 9 anliegt. Der Rotor 9 weist eine weitere Kontur 38 zum Auslenken des Hebels 37 auf. Mit dem einen Ende des Hebels 37 wirkt eine mittels eines Zugankermagneten 39 elektromagnetisch betätigbare Sperrklinke 40 der Hebel-Drehsperre 36 derart zusammen, daß der Hebel 37 zum Auslenken freigebbar ist oder das Auslenken des Hebels 37 gesperrt ist.

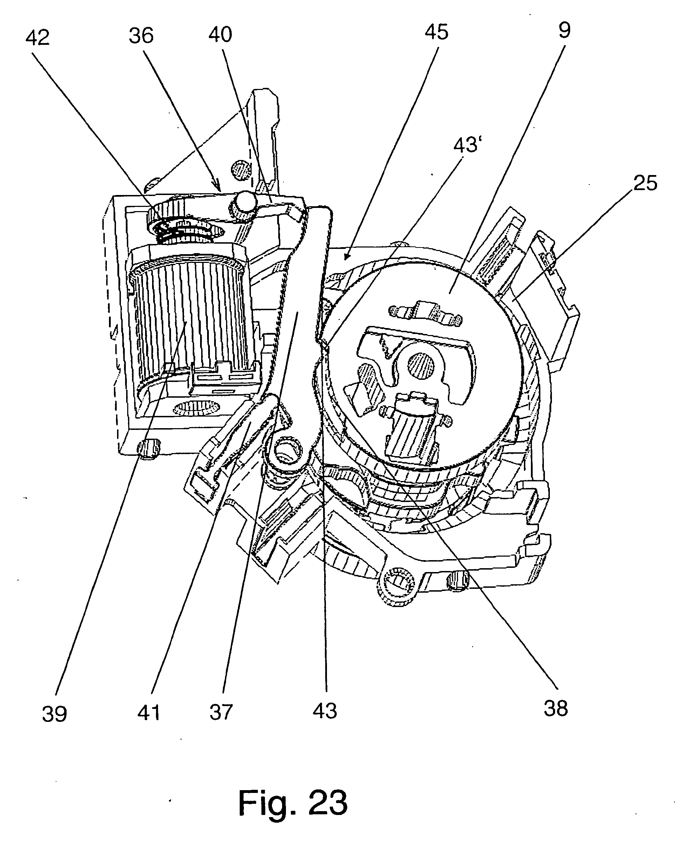

Der Hebel 37 der Hebel-Drehsperre 36 besitzt eine Druckfeder 41, welche bewirkt, daß der Hebel 37 immer am Rotor 9 anliegt. Am Zugankermagnet 39 befindet sich eine weitere Druckfeder 42. Im Bereich der Berührung des Hebels 37 am Rotor 9 ist die sich mit dem Rotor 9 mitdrehende Kontur 38 angebracht. Diese Kontur 38 ist so ausgebildet, daß der druckfederbelastete Hebel 37 beim Drehen des Rotors 9 eine Schwenkbewegung machen kann. In Ausgangsstellung '0' des Zündschlosses 1 liegt der Hebel 37 der Hebel-Drehsperre 36 durch die Druckfeder 41 immer am kleinsten Durchmesser des Rotors 9 an. Versucht man nun, den Rotor 9 zu drehen, so dreht sich eine Sperrkante 43 an der Kontur 38 des Rotors 9 an eine korrespondierende Sperrkante 43' am Hebel 37, wie man anhand von Fig. 23 erkennt. Der Hebel 37 stützt sich dabei am Zugankermagnet 39 ab. Dadurch kann der Rotor 9 nicht weiter gedreht werden.

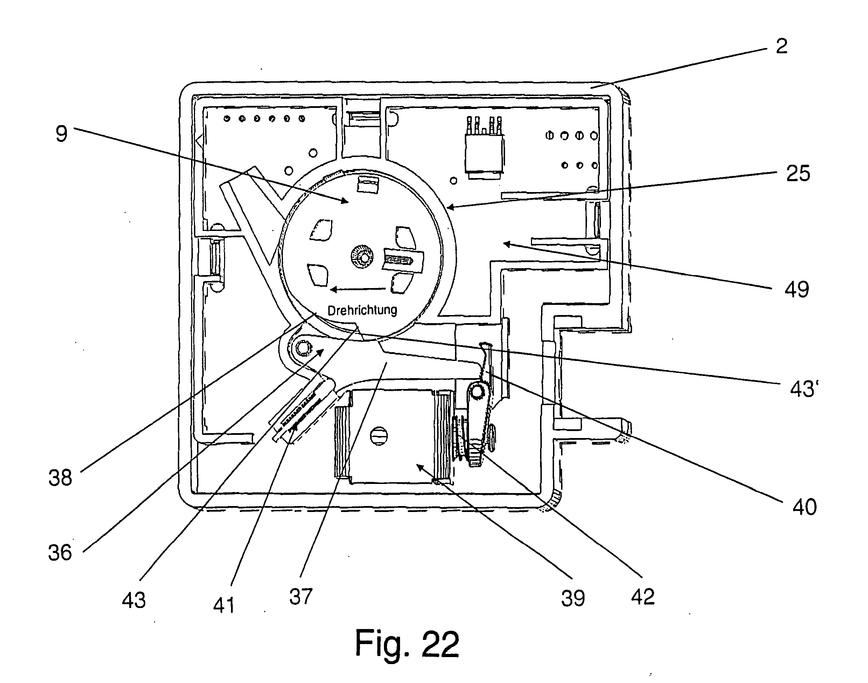

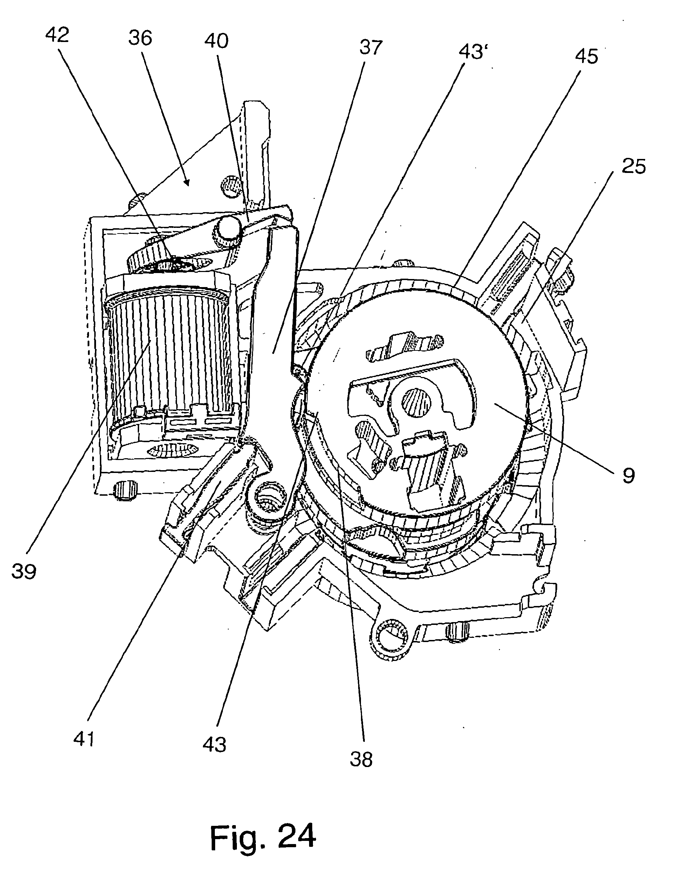

Erkennt nun das Zündschloß 1 einen gültigen elektronischen Schlüssel 3, erfolgt das Bestromen des Zugankermagneten 39, wodurch die Sperrklinke 40 den Hebel 37 freigibt. Dadurch ist es ermöglicht, wie in Fig. 22 dargestellt ist, daß der Hebel 37 ausschwenken kann. Dies bedeutet, daß nun die Sperrklinke 40 den Hebel 37 nicht mehr abstützt. Damit ist es dem Hebel 37 ermöglicht, eine Schwenkbewegung zu machen und somit die Drehung des Rotors 9 freizugeben, wie man anhand von Fig. 24 erkennt.

Diese Ausgestaltung ermöglicht es vorteilhafterweise, daß nur bei einem durch das Zündschloß 1 als gültig erkannten Schlüssel 3 die Drehsperre des Rotors 9 aufgehoben wird. Die Aufhebung erfolgt durch die Bestromung des Zugankermagneten 39 und der daraus resultierenden Möglichkeit den Hebel 37 ausschwenken zu können.

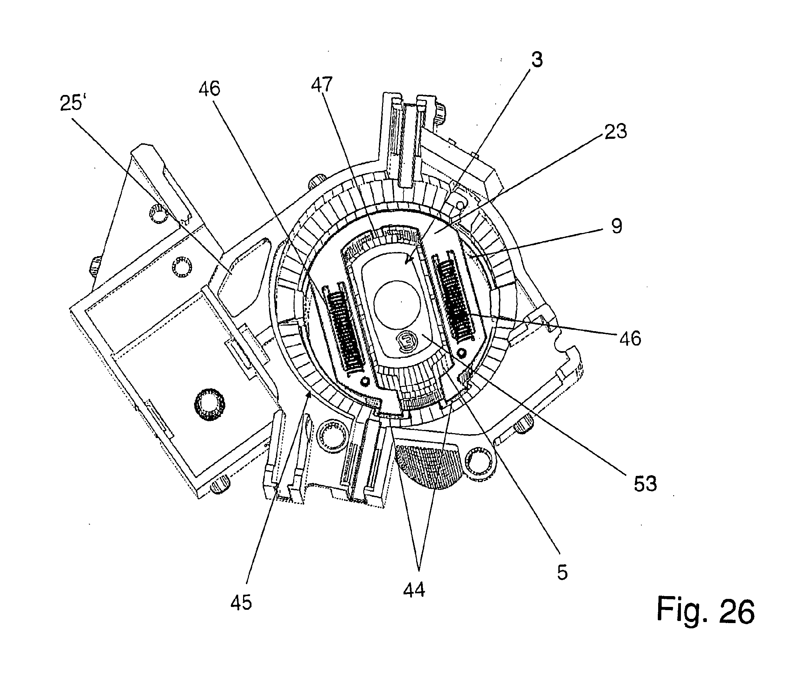

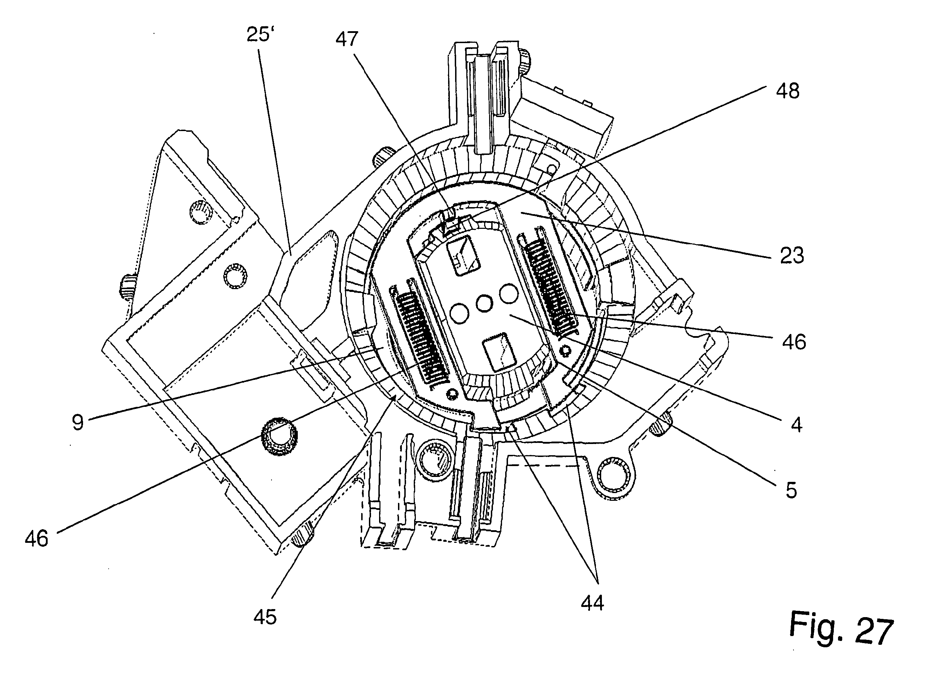

Um einerseits das Drehen der Handhabe 4 bei KeylessGo-Betrieb zu verhindern, andererseits jedoch das gewohnte Bedienen des Zündschlosses 1 durch Drehen des in der Aufnahme 5 befindlichen Schlüssels 3 zum Starten des Kraftfahrzeugs zu ermöglichen, falls der Benutzer trotz KeylessGo-Möglichkeit bewußt auf den NonKeylessGo-Betrieb wechselt, ist im Rotor 9 ein beweglicher Sperrschieber 23 angeordnet. Entsprechend Fig. 25 steht der Sperrschieber 23, wenn weder der Schlüssel 3 noch die Handhabe 4 in die Aufnahme eingeführt ist, mit Aussparungen 44 am Drehlager 45 für den Rotor 9 derart in Eingriff, daß eine Drehung des Rotors 9 gesperrt ist. Wenn der Schlüssel 3 in die Aufnahme 5 eingeführt ist, was in Fig. 26 gezeigt ist, kommt der Sperrschieber 23 außer Eingriff mit den Aussparungen 44 am Drehlager 45, derart daß eine Drehung des Rotors 9 freigegeben ist. Ist jedoch die Handhabe 4 in die Aufnahme 5 eingeführt, was in Fig. 27 zu sehen ist, so kommt der Sperrschieber 23 ebenfalls in Eingriff mit den Aussparungen 44 am Drehlager 45, derart daß eine Drehung des Rotors 9 gesperrt ist.

Gemäß Fig. 25 besitzt der im Rotor 9 befindliche Sperrschieber 23 zwei Druckfedern 46. Diese Druckfedern 46 sind am Sperrschieber 23 vormontiert. Wird der Rotor 9 samt dem zusätzlichen Sperrschieber 23 im Zündschloß 1 montiert, so rastet der Sperrschieber 23 in die seitlichen Aussparungen 44 des Zylindervorderteils 25' am Drehlager 45 ein und verhindert so ein Drehen des Rotors 9. Das Vorderteil 53 des Schlüssels 3 besitzt gemäß Fig. 26 eine zur Innenkontur des Sperrschiebers 23 korrespondierende Kontur, wobei ein sich am Vorderteil 53 des Schlüssels 3 abstützender Steg 47 des Sperrschiebers 23 beim Einstecken des Schlüssels 3 in die Aufnahme 5 aufgrund der Kontur am Vorderteil 53 des Schlüssels 3 den Sperrschieber 23 zur Lösung der Sperrfunktion seitlich auslenkt.

Die Handhabe 4 weist eine dem Vorderteil 53 des Schlüssels 3 ähnliche Kontur auf, besitzt jedoch auf beiden Seiten eine Nut 48, welche etwas breiter ist als der Steg 47 am Sperrschieber 23. Beim Einstecken der Handhabe 4 in die Aufnahme 5 gleitet der Steg 47 des Sperrschiebers 23 in die Nut 48 an der Handhabe 4. Aufgrund dieser Anordnung von Steg 47 und Nut 48 erfolgt dann keine seitliche Anlenkung des Sperrschiebers 23, so daß dieser in seiner Position bleibt, wodurch das Drehen des Rotors 9 verhindert ist. Befindet sich weder der Schlüssel 3 noch die Handhabe 4 in der Aufnahme 5, so wird weiterhin durch den Hebel 20 für den SSS-Schalter 18 die Drehung des Rotors 9 verhindert.

Vorteilhafterweise ist durch diesen zusätzlichen Sperrschieber 23 ein weiterer Drehschutz für das Zündschloß 1 gegeben. Es ist nun nicht mehr möglich bei KeylessGo-Betrieb und gesteckter Handhabe 4 diese zu drehen, wodurch ansonsten möglicherweise schwerwiegende Fehlfunktionen des Zündschlosses 1 ausgeschlossen sind.

Die Erfindung ist nicht auf die beschriebenen und dargestellten Ausführungsbeispiele beschränkt. Sie umfaßt vielmehr auch alle fachmännischen Weiterbildungen im Rahmen der durch die Patentansprüche definierten Erfindung. So kann die Erfindung nicht nur an Zündschlössern für beliebige Fahrzeuge Verwendung finden, sondern auch an sonstigen Schlössern, beispielsweise solchen die an Arbeitsmaschinen, Immobilien o. dgl. angeordnet sind, eingesetzt werden.

### Bezugszeichen-Liste:

- 1:: Zündschloß
- 2:: Gehäuse
- 3:: Schlüssel
- 4:: Handhabe
- 5:: Aufnahme (im Zündschloß)
- 6:: Betätiger (von Handhabe)
- 7:: Schaltelement / SAS-Schalter
- 8:: Lichtleiter
- 9:: Rotor
- 10:: Steckanschluß
- 11:: Stecker
- 12:: Abziehschutz
- 13:: Bowdenzug
- 14:: Finger (am Bowdenzug)
- 15:: Hebel
- 16:: Kontur (am Rotor)
- 17:: Druckfeder
- 18:: Schalter / SSS-Schalter
- 19:: Leiterplatte
- 20:: (weiterer) Hebel
- 21:: Druckfeder (an weiterem Hebel)
- 22:: (rohrähnlicher) Zylinder
- 23:: Rastschieberpaar / Sperrschieber
- 24:: Aussparung
- 25:: Zylinderhinterteil
- 25':: Zylindervorderteil
- 26:: Weckschalter
- 27:: ELV-Schalter
- 28:: (weiterer rohrähnlicher) Zylinder
- 29:: Lichtschranke
- 30:: (elektrisches / elektronisches) Bauelement
- 31:: Unterseite (von Handhabe)
- 32:: Stößel (an Handhabe)
- 33:: Hülse
- 34:: Feder
- 35:: Betätigerteil
- 36:: Hebel-Drehsperre
- 37:: Hebel (von Hebel-Drehsperre)
- 38:: Kontur (für Hebel-Drehsperre)
- 39:: Zugankermagnet
- 40:: Sperrklinke
- 41:: Druckfeder (von Hebel-Drehsperre)
- 42:: Druckfeder (von Zugankermagnet)
- 43:: Sperrkante (an Kontur)
- 43':: Sperrkante (an Hebel)
- 44:: Aussparung
- 45:: Drehlager (für Rotor)
- 46:: Druckfeder (von Sperrschieber)
- 47:: Steg (an Sperrschieber)
- 48:: Nut (an Handhabe)
- 49:: Elektronikmodul
- 50:: Lagerstelle (von Hebel für SSS-Schalter)
- 51:: Kragen (von Schlüssel)
- 52:: Haltekragen (von Handhabe)
- 53:: Vorderteil (von Schlüssel)
- 54:: Steckerkragen

## Patentansprüche

1. Zündschloß in einem Kraftfahrzeug für ein mit einem Schlüssel (3), wie einem elektronischen Schlüssel, einem Identifikations(ID)-Geber oder einer Smartcard, zur bedienungsunabhängigen Fahrberechtigung in der Art einer KeylessGo-Funktionalität oder zur bedienungsabhängigen Fahrberechtigung in der Art einer NonKeylessGo-Funktionalität zusammenwirkendes Zündschloßsystem, mit einem bewegbaren Rotor (9), mit einer im und/oder am Rotor (9) angeordneten Aufnahme (5), in die wahlweise der Schlüssel (3) oder eine Handhabe (4) zur Bedienung des Zündschlosses (1) einführbar ist, wobei der Rotor (9) mittels des Schlüssels (3) aus einer Ausgangsstellung in wenigstens eine Betätigungsstellung bewegbar ist, wobei der Rotor (9) in der Betätigungsstellung schaltend auf ein Schaltelement einwirkt, wobei ein elektronischer Code austauschbar ist, so daß nach positiver Auswertung des Codes wenigstens eine vom Zündschloß (1) bewirkbare Funktion, wie das Einschalten von Verbrauchern im Kraftfahrzeug oder das Starten des Kraftfahrzeugs, freigegeben ist oder ausgelöst wird, und wobei am Rotor (9) und/oder im Rotor (9) und/oder durch den Rotor (9) wenigstens eine Zündschloßfunktion, wie die Sperrung oder Freigabe des Schlüssels (3) im Zündschloß (1), die Betätigung eines Schalters (7) mittels des Schlüssels (3) im Zündschloß (1) oder die Sperrung oder Freigabe der Bewegung des Rotors (9), bewirkbar ist, **dadurch gekennzeichnet, daß** bei Einführen des Schlüssels (3) in die Aufnahme (5) ein elektrischer Schalter (18) betätigbar oder bei in der Aufnahme (5) befindlichen Schlüssel (3) betätigt ist, daß im Rotor (9) ein Hebel (20) befindlich ist, wobei der Hebel (20) sich mit dem Rotor (9) mitdreht, daß eine Seite des Hebels (20) in den Steckweg des Schlüssels (3) hineinreicht, und daß beim Stecken des Schlüssels (3) der Hebel (20) ausgelenkt wird, derart daß die andere Seite des Hebels (20) den Schalter (18) betätigt.

2. Zündschloß nach Anspruch 1, **dadurch gekennzeichnet, daß** der elektronische Code zwischen dem Schlüssel (3) und dem Zündschloß (1) austauschbar ist.

3. Zündschloß nach Anspruch 1 oder 2, **dadurch gekennzeichnet, daß** der Hebel (20) mittels einer Druckfeder (21) derart belastet ist, daß der Hebel (20) in den Steckweg des Schlüssels (3) hineinreicht.

4. Zündschloß nach Anspruch 1, 2 oder 3, **dadurch gekennzeichnet, daß** der Schalter (18) auf einer Leiterplatte (19) im Gehäuse (2) des Zündschlosses (1) befindlich ist.

5. Zündschloß nach einem der Ansprüche 1 bis 4, **dadurch gekennzeichnet, daß** die andere Seite des Hebels (20) beim Erreichen der Endstellung des Schlüssels (3) in der Aufnahme (5) in einen rohrähnlichen Zylinder (22) am Rotor (9) einschwenkt, derart daß der Schalter (18) mittels des rohrähnlichen Zylinders (22) bei Bewegung des Rotors (9) betätigt wird.

6. Zündschloß nach einem der Ansprüche 1 bis 5, **dadurch gekennzeichnet, daß** das Drehlager (45) für den bewegbaren Rotor (9) in der Art eines Zylinders ausgebildet ist sowie aus einem Zylindervorderteil (25') und einem Zylinderhinterteil (25) besteht.

7. Zündschloß nach Anspruch 6, **dadurch gekennzeichnet, daß** der Hebel (20) in ausgeschwenkter Stellung in eine Aussparung (24) im Zylinderhinterteil (25) ragt.

8. Zündschloß nach Anspruch 5, 6 oder 7, **dadurch gekennzeichnet, daß** der rohrähnliche Zylinder (22) weitere Schalter, wie einen Weckschalter (26) oder einen ELV-Schalter (27), betätigt.

9. Zündschloß nach einem der Ansprüche 1 bis 8, **dadurch gekennzeichnet, daß** Lichtschranken (29) zur Detektierung verschiedener Drehzustände des Rotors (9) mittels eines weiteren rohrähnlichen Zylinders (28) am Rotor (9) steuerbar sind.

10. Zündschloß nach einem der Ansprüche 1 bis 9, **dadurch gekennzeichnet, daß** bei einem Kraftfahrzeug mit einem automatischen Getriebe lediglich in Stellung ,P' des Wählhebels für das Getriebe der Schlüssel (3) aus der Aufnahme (5) entnehmbar ist, daß der Wählhebel des Getriebes mit einer Seite eines Bowdenzugs (13) verbunden ist, daß die andere Seite des Bowdenzugs (13) einen freistehenden Finger (14) aufweist, der in das Zündschloß (1) derart hineinragt, daß über die Stellung des Wählhebels die Freigabe des Schlüssels (3) zur Entnahme aus der Aufnahme (5) gesteuert ist, und daß ein mit dem Finger (14) zusammenwirkender Hebel (15) zur Steuerung der Freigabe des Schlüssels (3) oder des Wählhebels von einer am Rotor (9) befindlichen Kontur (16) bewegt wird.

11. Zündschloß nach Anspruch 10, **dadurch gekennzeichnet, daß** eine Druckfeder (17) auf den Hebel (15) derart einwirkt, daß der Hebel (15) an der Kontur (16) des Rotors (9) anliegt, daß durch Drehung des Rotors (9) der Hebel (15) schwenkbar ist, und daß der Finger (14) am Hebel (15) abstützbar oder der Hebel (15) durch den Finger (14) blockierbar ist.

12. Zündschloß nach einem der Ansprüche 1 bis 11, **dadurch gekennzeichnet, daß** bei Betätigung der Handhabe (4) in der Ausgangsstellung des Rotors (9) schaltend auf einen im Zündschloß (1) befindlichen Schalter (7) eingewirkt wird.

13. Zündschloß nach Anspruch 12, **dadurch gekennzeichnet, daß** der zusätzliche Schalter (7) bei in der Aufnahme (5) befindlichen Schlüssel (3) dauernd sowie bei in der Aufnahme (5) befindlicher Handhabe (4) lediglich bei deren Betätigung geschaltet ist.

14. Zündschloß nach Anspruch 12 oder 13, **dadurch gekennzeichnet, daß** die Handhabe (4) einen Betätiger (6) mit einem Stößel (32) aufweist, daß die Handhabe (4) mittels des Stößels (32) bewegend auf eine Hülse (33) im Rotor (9) einwirkt, und daß der Schlüssel (3) bei dessen Einstecken in die Aufnahme (5) die Hülse (33) direkt bewegt.

15. Zündschloß nach Anspruch 14, **dadurch gekennzeichnet, daß** die Hülse (33) über ein Betatigerteil (35), das mit einer Feder (34) versehen ist, den Schalter (7) betätigt.

16. Zündschloß nach einem der Ansprüche 1 bis 15, **dadurch gekennzeichnet, daß** eine mechanische Sperre die Drehung des Rotors (9) lediglich nach positiver Auswertung des Codes freigibt, daß die mechanische Sperre aus einer Hebel-Drehsperre (36) besteht, daß ein Hebel (37) der Hebel-Drehsperre (36) mittels einer Druckfeder (41) am Rotor (9) anliegt, daß der Rotor (9) eine Kontur (38) zum Auslenken des Hebels (37) aufweist, und daß mit dem einen Ende des Hebels (37) eine elektromagnetisch betätigbare Sperrklinke (40) der Hebel-Drehsperre (36) derart zusammenwirkt, daß der Hebel (37) zum Auslenken freigebbar ist oder das Auslenken des Hebels (37) gesperrt ist.

17. Zündschloß nach Anspruch 16, **dadurch gekennzeichnet, daß** die Kontur (38) des Rotors (9) eine Sperrkante (43) aufweist, die mit einer korrespondierenden Sperrkante (43') am Hebel (37) derart zusammenwirkt, daß die Bewegung des Rotors (9) sperrbar ist.

18. Zündschloß nach einem der Ansprüche 1 bis 17, **dadurch gekennzeichnet, daß** im Rotor (9) ein beweglicher Sperrschieber (23) angeordnet ist, daß der Sperrschieber (23), wenn weder der Schlüssel (3) noch die Handhabe (4) in die Aufnahme (5) eingeführt ist, mit Aussparungen (44) am Drehlager (45) derart in Eingriff steht, daß eine Drehung des Rotors (9) gesperrt ist, daß der Sperrschieber (23), wenn der Schlüssel (3) in der Aufnahme (5) eingeführt ist, außer Eingriff mit den Aussparungen (44) am Drehlager (45) kommt, derart daß eine Drehung des Rotors (9) freigegeben ist, und daß der Sperrschieber (23), wenn die Handhabe (4) in die Aufnahme (5) eingeführt ist, ebenfalls in Eingriff mit den Aussparungen (44) am Drehlager (45) kommt, derart daß eine Drehung des Rotors (9) gesperrt ist.

19. Zündschloß nach Anspruch 18, **dadurch gekennzeichnet, daß** der Sperrschieber (23) zwei vormontierte Druckfedern (46) aufweist, derart daß der Sperrschieber (23) bei dessen Montage in die Aussparung (44) am Drehlager (45) einrastet, daß der Sperrschieber (23) einen Steg (47) aufweist, der beim Einstecken des Schlüssels (3) in die Aufnahme (5) sich am Vorderteil (53) des Schlüssels (3) derart abstützt, daß der Sperrschieber (23) zur Lösung der Sperrfunktion ausgelenkt wird, und daß die Handhabe (4) eine Nut (48) aufweist, in die der Steg (47) beim Einstecken der Handhabe (4) in die Aufnahme (5) eingreift, derart daß der Sperrschieber (23) in seiner die Sperrfunktion ausübenden Position bleibt.

## Claims

1. An ignition lock for a motor vehicle for an ignition lock system interacting with a key (3), such as an electronic key, an identification (ID) transmitter, or a smart card, for the operation-independent access authorization in the manner of a keyless-go functionality or for the operation-dependent access authorization in the manner of a non-keyless-go functionality, having a movable rotor (9), having a receptacle (5) disposed in and/or on the rotor (9), into which optionally the key (3), or a handle (4) may be inserted for operating the ignition lock (1), wherein the rotor (9) may be moved from a base position into at least one actuating position by means of the key (3), wherein the rotor (9) acts upon a switching element in the actuating position in a switching manner, wherein an electronic code is interchangeable such that after positive evaluation of the code, at least one function effected by the ignition lock (1), such as the turning on of consumer loads in the motor vehicle, or the starting of the motor vehicle, is released or activated, and wherein at least one ignition lock function, such as the locking or releasing of the key (3) in the ignition lock (1), the actuating of a switch (7) by means of the key (3) in the ignition lock (1), or the locking or releasing of the movement of the rotor (9) may be effected on the rotor (9), and/or in the rotor (9), and/or by means of the rotor (9), **characterized in that** with the insertion of the key (3) into the receptacle (5) an electric switch (18) may be actuatable, or is actuated in case of a key (3) being located in the receptacle (5), that a lever (20) is located in the rotor (9), wherein the lever (20) follows the rotation of the rotor (9), that one side of the lever (20) projects into the insertion path of the key (3), and that with the insertion of the key (3) the lever (20) is deflected such that the other side of the lever (20) actuates the switch (18).

2. The ignition lock according to claim 1, **characterized in that** the electronic code is interchangeable between the key (3) and the ignition (1).

3. The ignition lock according to claims 1 or 2, **characterized in that** the lever (20) is loaded by means of a pressure spring (21) such that the lever (20) projects into the insertion path of the key (3).

4. The ignition lock according to claims 1, 2, or 3, **characterized in that** the switch (18) is located on a printed circuit board (19) within the housing (2) of the ignition lock (1).

5. The ignition lock according to one of the claims 1 to 4, **characterized in that** the other side of the lever (20) pivots upon reaching the end position of the key (3) in the receptacle (5) in a tube-like cylinder (22) on the rotor (9) such that the switch (18) is activated by means of the tube-like cylinder (22) upon the movement of the rotor (9).

6. The ignition lock according to one of the claims 1 to 5, **characterized in that** the pivot bearing (45) for the movable rotor (9) is embodied in the manner of a cylinder, and is comprised of a cylinder front (25') and a cylinder back (25).

7. The ignition lock according to claim 6, **characterized in that** in its pivoted open position, the lever (20) projects into a recess (24) in a cylinder rear (25).

8. The ignition lock according to claims 5, 6, or 7, **characterized in that** the tube-like cylinder (22) actuates additional switches, such as a wake switch (26), or an ELV (extra-low voltage) switch (27).

9. The ignition lock according to one of the claims 1 to 8, **characterized in that** photoelectric relays (29) may be controlled for detecting different pivoting states of the rotor (9) by means of an additional tube-like cylinder (28) on the rotor (9).

10. The ignition lock according to one of the claims 1 to 9, **characterized in that** with a motor vehicle having an automatic transmission, the key (3) may be removed from the receptacle (5) only in the 'P' position of the selecting lever for the transmission, that the selecting lever of the transmission is connected to a side of the Bowden cable (13), that the other side of the Bowden cable (13) has a free-standing finger (14) projecting into the ignition lock (1) such that the release of the key (3) for removing the same from the receptacle (5) is controlled via the position of the selecting lever, and that a lever (15) interacting with the finger (14) is being moved for controlling the release of the key (3), or of the selecting lever from a contour (16) located on the rotor (9).

11. The ignition lock according to claim 10, **characterized in that** a pressure spring (17) acts upon the lever (15) such that the lever (15) abuts on the contour (16) of the rotor (9), that the lever (15) may be pivoted by means of the rotation of the rotor (9), and that the finger (14) may be supported on the lever (15), or the lever (15) may be blocked by the finger (14).

12. The ignition lock according to one of the claims 1 to 11, **characterized in that** the actuation of the handle (4) acts upon a switch (7) located in the ignition (1) in a switching manner in the base position of the rotor (9).

13. The ignition lock according to claim 12, **characterized in that** with a key (3) located in the receptacle (5), the additional switch (7) is switched permanently, and with the handle (4) being located in the receptacle (5) the same is switched only in case of the actuation of the same.

14. The ignition lock according to claims 12 or 13, **characterized in that** the handle (4) has an actuator (6) comprising a cam follower (32), that the handle (4) acts upon a bushing (33) in the rotor (9) in a moving manner by means of the cam follower (32), and that the key (3) directly moves the bushing (33) once it is inserted into the receptacle (5).

15. The ignition lock according to claim 14, **characterized in that** the bushing (33) actuates the switch (7) via an actuating member (35) that is equipped with a spring (34).

16. The ignition lock according to one of the claims 1 to 15, **characterized in that** a mechanical lock releases the rotation of the rotor (9) only after positive evaluation of the code, that the mechanical lock consists of a lever safety lock (36), that a lever (37) of the lever safety lock (36) abuts on the rotor (9) by means of a pressure spring (41), that the rotor (9) has a contour (38) for deflecting the lever (37), and that an electromagnetically actuatable safety catch (40) of the lever safety lock (36) interacts with the one end of the lever (37) such that the lever (37) is releasable for deflection, or that the deflection of the lever (37) is blocked.

17. The ignition lock according to claim 16, **characterized in that** the contour (38) of the rotor (9) has a lock edge (43) that interacts with a corresponding lock edge (43') on the lever (37) such that the movement of the rotor (9) can be locked.

18. The ignition lock according to one of the claims 1 to 17, **characterized in that** a movable slide lock (23) is disposed in the rotor (9), that when neither the key (3) nor the handle (4) are inserted into the receptacle (5), the slide lock (23) is engaged into recesses (44) on the pivot bearing (45) such that a rotation of the rotor (9) is locked, that when the key (3) is inserted into the receptacle (5), the slide lock (23) is disengaged from the recesses (44) at the pivot bearing (45) such that a rotation of the rotor (9) is released, and that when the handle (4) is inserted into the receptacle (5), the slide lock (23) is also engaged in the recesses (44) at the pivot bearing (45) such that a rotation of the rotor (9) is locked.

19. The ignition lock according to claim 18, **characterized in that** the slide lock (23) has two pre-mounted pressure springs (46) such that upon its installation the slide lock (23) engages into the recess (44) at the pivot bearing (45), that the slide lock (23) has a bar (47) being supported during the insertion of the key (3) into the receptacle (5) at the front (53) of the key (3) such that the slide lock (23) is disengaged in order to release the locking function, and that the handle (4) has a groove (48) into which the bar (47) engages upon the insertion of the handle (4) into the receptacle (5) such that the slide lock (23) remains in its position carrying out the locking function.

## Revendications

1. Contacteur dans un véhicule à moteur pour un système à contacteur à clé interagissant avec une clé (3), par exemple une clé électronique, un codeur d'identification (ID) ou une Smartcard, pour l'autorisation de conduite indépendante de l'utilisation à la manière d'une fonctionnalité KeylessGo ou pour l'autorisation de conduite indépendante de l'utilisation à la manière d'une fonctionnalité NonKeylessGo, avec un rotor (9) mobile, avec un logement (5) disposé dans et/ou sur le rotor (9), dans lequel au choix la clé (3) ou une manette (4) pour l'utilisation du contacteur (1) peut être insérée, le rotor (9) pouvant être déplacé à l'aide de la clé (3) d'une position de départ vers au moins une position d'actionnement, le rotor (9) agissant, dans la position d'actionnement, sur un élément de commutation, un code électronique pouvant être échangé, de façon à ce que, après une analyse positive du code, au moins une fonction exécutable par le contacteur (1), comme la mise en marche de consommateurs dans le véhicule à moteur ou le démarrage du véhicule à moteur, est activée ou déclenchée et, sur le rotor (9) et/ou dans le rotor (9) et/ou par travers le rotor (9), au moins une fonction du contacteur, comme le blocage ou le déblocage de la clé (3) dans le contacteur (1), l'actionnement d'un commutateur (7) à l'aide de la clé (3) dans le contacteur (1) ou le blocage ou déblocage du mouvement du rotor (9), est exécutable, **caractérisé en ce que**, lors de l'insertion de la clé (3) dans le logement (5), un commutateur électrique (18) peut être actionné ou est actionné lorsque la clé (3) se trouve dans le logement (5), **en ce qu'**un levier (20) se trouve dans le rotor (9), le levier (20) tournant en même temps que le rotor (9), **en ce qu'**un côté du levier (20) dépasse dans le trajet d'insertion de la clé (3) et **en ce que** lors de l'insertion de la clé (3), le levier (20) est dévié de façon à ce que l'autre côté du levier (20) actionne le commutateur (18).

2. Contacteur selon la revendication 1, **caractérisé en ce que** le code électronique peut être échangé entre la clé (3) et le contacteur (1).

3. Contacteur selon la revendication 1 ou 2, **caractérisé en ce que** le levier (20) est sollicité à l'aide d'un ressort de compression (21), de façon à ce que le levier (20) dépasse dans le trajet d'insertion de la clé (3).

4. Contacteur selon la revendication 1, 2 ou 3, **caractérisé en ce que** le commutateur (18) se trouve sur un circuit imprimé (19) dans le boîtier (2) du contacteur (1).

5. Contacteur selon l'une des revendications 1 à 4, **caractérisé en ce que** l'autre côté du levier (20) pivote, lorsque la position finale de la clé (3) dans le logement (5) est atteinte, dans un cylindre tubulaire (22) sur le rotor (9), de façon à ce que le commutateur (18) soit actionné à l'aide du cylindre tubulaire (22) lors du mouvement du rotor (9).

6. Contacteur selon l'une des revendications 1 à 5, **caractérisé en ce que** le palier rotatif (45) pour le rotor (9) mobile est conçu à la manière d'un cylindre et constituée d'une partie avant de cylindre (25') et d'une partie arrière de cylindre (25).

7. Contacteur selon la revendication 6, **caractérisé en ce que** le levier (20) dépasse, en position déployée, dans un évidement (24) dans la partie arrière du cylindre (25).

8. Contacteur selon la revendication 5, 6 ou 7, **caractérisé en ce que** le cylindre tubulaire (22) actionne d'autres commutateurs, comme un commutateur de réveil (26) ou un commutateur ELV (27).

9. Contacteur selon l'une des revendications 1 à 8, **caractérisé en ce que** des barrières photoélectriques (29) peuvent être commandées pour la détection de plusieurs états de rotation du rotor (9) à l'aide d'un autre cylindre tubulaire (28) sur le rotor (9).

10. Contacteur selon l'une des revendications 1 à 9, **caractérisé en ce que**, pour un véhicule à moteur avec une boîte de vitesses automatique, la clé (3) peut être retirée du logement (5) uniquement lorsque le levier de sélection des vitesses est en position « P », **en ce que** le levier de sélection des vitesses est relié avec un côté d'un câble Bowden (13), **en ce que** l'autre côté du câble Bowden (13) comprend un doigt libre (14) qui dépasse dans le contacteur (1) de façon à ce que, du fait de la position du levier de sélection, le dégagement de la clé (3) est commandé pour le retrait hors du logement (5) et **en ce qu'**un levier (15) interagissant avec le doigt (14) est déplacé pour la commande du dégagement de la clé (3) ou du levier de sélection d'un contour (18) se trouvant sur le rotor (9).

11. Contacteur selon la revendication 10, **caractérisé en ce qu'**un ressort de compression (17) agit sur le levier (15) de façon à ce que le levier (15) s'appuie contre le contour (16) du rotor (9), **en ce que** du fait de la rotation du rotor (9), le levier (15) peut pivoter et **en ce que** le doigt (14) peut s'appuyer contre le levier (15) ou le levier (15) peut être bloqué par le doigt (14).

12. Contacteur selon l'une des revendications 1 à 11, **caractérisé en ce que**, lors de l'actionnement de la manette (4) dans la position de départ du rotor (9), une action de commutation est exercée sur un commutateur (7) se trouvant dans le contacteur (1).

13. Contacteur selon la revendication 12, **caractérisé en ce que** le commutateur supplémentaire (7) est commuté en permanence lorsque la clé (3) se trouve dans le logement (5) ainsi que lorsque la manette (4) se trouvant dans le logement (5) uniquement lors de son actionnement.

14. Contacteur selon la revendication 12 ou 13, **caractérisé en ce que** la manette (4) comprend un actionneur (6) avec un poussoir (32), **en ce que** la manette (4) agit à l'aide du poussoir (32) en poussant sur une gaine (33) dans le rotor (9) et **en ce que** la clé (3) déplace directement la gaine (33) lors de son insertion dans le logement (5).

15. Contacteur selon la revendication 14, **caractérisé en ce que** la gaine (33) actionne le commutateur (7) par l'intermédiaire d'une partie d'actionneur (35), qui est munie d'un ressort (34).

16. Contacteur selon l'une des revendications 1 à 15, **caractérisé en ce qu'**un blocage mécanique autorise la rotation du rotor (9) uniquement après une analyse positive du code, **en ce que** le blocage mécanique est constitué d'un blocage en rotation du levier (36), **en ce qu'**un levier (37) du blocage en rotation du levier (36) s'appuie contre le rotor (9) à l'aide d'un ressort de compression (41), **en ce que** le rotor (9) présente un contour (38) pour la déviation du levier (37) et **en ce que**, avec une extrémité du levier (37), un cliquet de blocage (40) à actionnement électromagnétique du blocage en rotation du levier (36) interagit, de façon à ce que le levier (37) peut être débloqué pour sa déviation ou la déviation du levier (37) est bloquée.

17. Contacteur selon la revendication 18, **caractérisé en ce que** le contour (38) du rotor (9) comprend une arête de blocage (43) qui interagit avec une arête de blocage (43') correspondante sur le levier (37) de façon à ce que le mouvement du rotor (9) puisse être bloqué.

18. Contacteur selon l'une des revendications 1 à 17, **caractérisé en ce que**, dans le rotor (9), se trouve un coulisseau de blocage (23), **en ce que** le coulisseau de blocage (23) est engrené avec des évidements (44) sur le palier rotatif (45), lorsque ni la clé (3) ni la manette (4) n'est insérée dans le logement (5), de façon à ce qu'une rotation du rotor (9) soit bloquée, **en ce que** le coulisseau de blocage (23), lorsque la clé (3) est insérée dans le logement (5), est désengrené des évidements (44) sur le palier rotatif (45), de façon à ce qu'une rotation du rotor (9) soit débloquée et **en ce que** le coulisseau de blocage (23), lorsque la manette (4) est insérée dans le logement (5), est également engrené avec les évidements (44) sur le palier rotatif (45), de façon à ce qu'une rotation du rotor (9) soit bloquée.

19. Contacteur selon la revendication 18, **caractérisé en ce que** le coulisseau de blocage (23) comprend deux ressorts de compression (46) prémontés, de façon à ce que le coulisseau de blocage (23) s'encliquète, lors de son montage, dans l'évidement (44) sur le palier rotatif (45), **en ce que** le coulisseau de blocage (23) présente un épaulement (47) qui, lorsque la clé (3) est insérée dans le logement (5), s'appuie sur la partie avant (53) de la clé (3) de façon à ce que le coulisseau de blocage (23) soit dévié pour le déblocage de la fonction de blocage et **en ce que** la manette (4) présente une rainure (48), dans laquelle l'épaulement (47) s'emboîte dans le logement (5) lors de l'insertion de la manette (4), de façon à ce que le coulisseau de blocage (23) reste dans sa position exerçant la fonction de blocage.
